# EUROPÄISCHE PATENTSCHRIFT

(11) **EP 3 271 228 B1**
(45) Veröffentlichungstag und Bekanntmachung des Hinweises auf die Patenterteilung: **13.07.2022**
(21) Anmeldenummer: 16711220.0
(22) Anmeldetag: 16.03.2016
(51) Int. Cl.: B60T 13/68, B60T 8/40, B60T 13/74

(54) **DRUCKERZEUGUNGSEINRICHTUNG UND BETÄTIGUNGSVERFAHREN MIT ELEKTRISCH ANGETRIEBENEM DOPPELHUBKOLBEN**
PRESSURE GENERATING DEVICE AND OPERATING METHOD COMPRISING AN ELECTRICALLY DRIVEN DUAL-ACTION RECIPROCATING PISTON
DISPOSITIF DE GÉNÉRATION DE PRESSION ET PROCÉDÉ D'ACTIONNEMENT À PISTON À DOUBLE EFFET A COMMANDE ÉLECTRIQUE

(30) Priorität: 16.03.2015 DE 202015107072 U; 16.03.2015 DE 202015107075 U; 16.03.2015 DE 202015107079 U; 21.04.2015 DE 202015107081 U; 30.12.2015 DE 202015008975 U; 30.12.2015 DE 202015008976 U
(43) Veröffentlichungstag der Anmeldung: 24.01.2018
(73) Patentinhaber: IPGate AG, 8808 Pfäffikon (CH)
(72) Erfinder: LEIBER, Heinz, 71739 Oberriexingen (DE); LEIBER, Thomas, 81675 München (DE); KÖGLSPERGER, Christian, 82538 Geretsried (DE)
(74) Vertreter: Würmser, Julian
(86) Internationale Anmeldenummer: PCT/EP2016/055703
(87) Internationale Veröffentlichungsnummer: WO 2016/146692

(56) Entgegenhaltungen:
- WO-A2-03/038246
- DE-A1-102009 043 484
- US-A1- 2012 061 192

## Beschreibung

Die Erfindung betrifft eine Druckerzeugungseinrichtung mit den Merkmalen des Patentanspruches 1, und ein Verfahren mit den Merkmalen des Patentanspruches 15.

### Stand der Technik

Aus DE 10 2009 043484 A1 ist ein Bremssystem für ein Hybridfahrzeug mit einer Steuereinrichtung und einem Bremspedal bekannt, welches zur Bremsdruckerzeugung mechanisch auf einen Kolben eines Kolben-Zylinder-Systems wirkt.

Aus DE 10 2014 224 201 A1 sind Kupplungsaktoren bekannt, die zur Betätigung einer Reibungskupplung über einen Geberzylinder und Nehmerzylinder über eine Hydraulikleitung miteinander verbunden sind, wobei der Geberzylinder über einen Elektromotor und ein Getriebe betätigt wird. Derartige Betätigungsansätze sind bei Einfachkupplungsbetätigungen, z.B. E-Kupplungen, sinnvoll, bei Doppelkupplungen wird je Betätigungssystem je ein System für die individuelle Betätigung benötigt. Dadurch sind die Kosten für Doppelkupplungssysteme annähernd doppelt so hoch wie bei E-Kupplungen. Zudem kommen Kosten für die Betätigung von weiteren hydraulischen Verbrauchern hinzu.

In DE 10 2006 038 446 A1 ist ein Doppelkupplungsbetatigungssystem mit Magnetventilen beschrieben, in dem über einen oder zwei elektromotorische Kolbenantriebe sowohl Kupplungen als auch Gangsteller betätigt werden. Da ein Gangsteller nicht gleichzeitig mit der Kupplung bestätigt werden kann, ist dieser Ansatz in Hinblick auf Kostenreduzierung sinnvoller als der Einsatz von Kupplungsaktuatoren und hydraulische oder elektromechanische Gangsteller. Die Betätigung von zwei Kupplungen mit einem Aktuator ist jedoch sehr aufwändig umsetzbar, da gleichzeitig im Schaltvorgang zwei Kupplungen betätigt werden. Dies ist mit einem Steller über eine entsprechende Ventilschaltung sehr schwierig realisierbar.

In WO 2015/036623 A2 ist eine elektrisch angetriebene Druckregel- und Volumenfördereinheit mit Doppelhubkolben beschrieben, mit der Druck über die Kolben-Weg-steuerung auf- und abgebaut werden kann, wobei ein Umschaltventil vorgesehen ist, mit der die beiden Arbeitskammern des Doppelhubkolbens miteinander verbunden werden können mit dem Zweck der Reduzierung der hydraulisch wirksamen Fläche und somit Drehmomentreduzierung des Antriebsmotors.

### Aufgabe der Erfindung

Aufgabe der Erfindung ist es, eine elektrisch angetriebene Stellaktuatorik zu schaffen, mit der mehrere Hydraulikverbraucher, insbesondere Nehmerzylinder, z.B. in Form von Kupplungen, Gangsteller, hydraulisch betätigte Zylinder mit einer oder zwei hydraulischen Druckkammern, Kolben für elektrohydraulischen Ventiltrieb oder Lenkungen, mit wenigen Schaltventilen bedient werden können und zugleich eine präzise Druckregelung umgesetzt werden kann.

### Lösung der Aufgabe

Die Aufgabe der Erfindung wird mit einer Druckerzeugungseinrichtung mit den Merkmalen des Patentanspruchs 1 gelöst.

Mit der erfindungsgemäßen Druckerzeugungseinrichtung wird eine über einen Linearaktuator oder eine Motor-Getriebe-Einheit elektrisch angetriebene Hydraulikkolbensteller basierend auf Doppelhubkolbenprinzip mit zwei hydraulischen Kammern geschaffen, der bedarfsgerecht sehr präzise in mehreren Verbrauchern gemeinsam Druck aufbauen und abbauen sowie gleichzeitig unter

Nutzung der gespeicherten Energie Druck in einem Verbraucher abbauen und in einem anderen Verbraucher aufbauen kann. Auch kann das Volumen einer Kammer eines Doppelkammer-Verbrauchers (z.B. Lenkung, Gangsteller) über die Druckerzeugereinrichtung in die zweite Kammer des Doppelkammer-Verbrauchers über die Druckerzeugereinheit geregelt verschoben werden. Die Druckregelung erfolgt dabei über Druckvolumensteuerung durch den Kolben und/oder über Druckregelung unter Nutzung von Druckgebern.

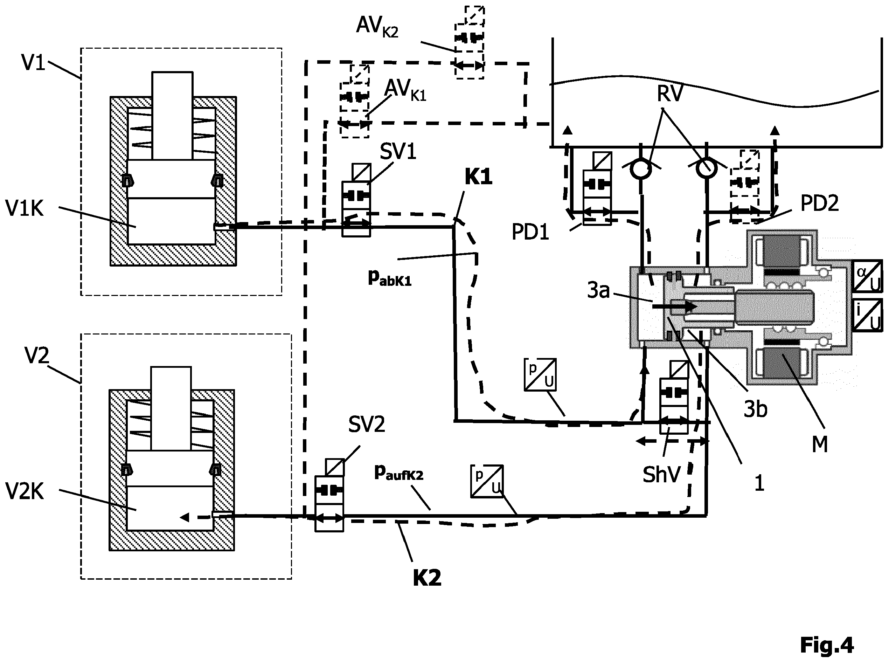

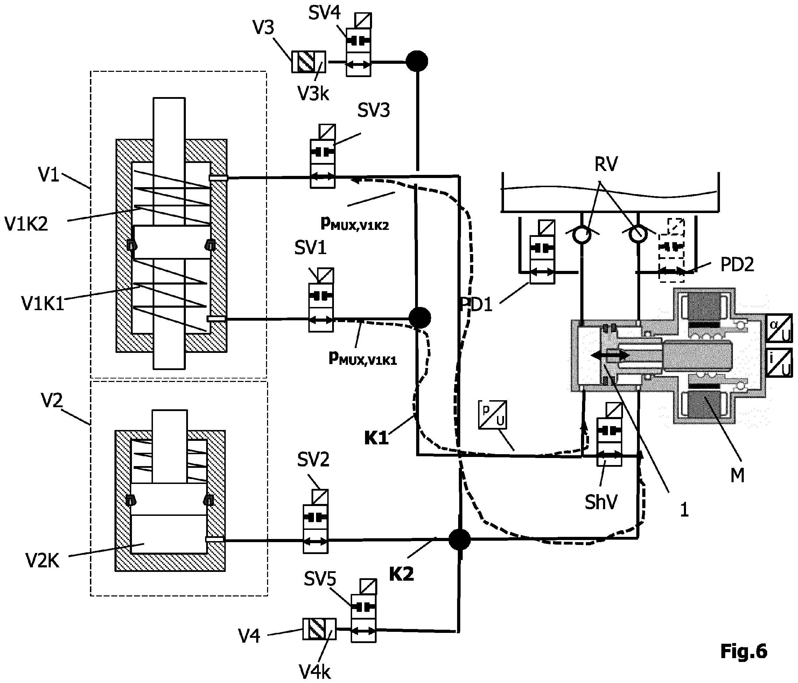

So kann mit der Druckerzeugungseinrichtung Druck in einem Hydrauliknehmerkolben, z.B. einem Kupplungssteller, aufgebaut werden, während in dem anderen Kupplungssteller gleichzeitig Druck abgebaut wird, wobei der gespeicherte Druck zumindest zum Teil zur Entlastung der Leistungsanforderung für den Stellantrieb genutzt wird, insbesondere bei dynamischen Stellvorgängen. So kann auch die Stellposition z.B. einer Stange einer Lenkung bzw. eines Gangstellers über die Druckregelung über den Doppelhubkolben sehr präzise verstellt werden, annähernd vergleichbar mit einer elektromechanischen Betätigung. Dies kann in beiden Hubrichtungen (Vor- und Rückhub des Doppelhubkolbens) erreicht werden. Dieser Aufbau ist insbesondere zur Steuerung eines Doppelkupplungsgetriebes geeignet, in dem gleichzeitig eine Kupplung gelöst wird, während die andere betätigt wird (Fig.4) bzw. eine Kolben in beide Seiten verstellt werden (Fig.6).

Eine mögliche Ausführungsform der Erfindung zeichnet sich dadurch aus, dass jeder Arbeitsraum der Kolben-Zylinder-Einheit der Druckerzeugungseinheit mittels einer Hydraulikleitung mit einem Vorratsbehältnis für ein Hydraulikmedium in Verbindung ist, wobei in jeder Hydraulikleitung zumindest einer Arbeitskammer des Doppelhubkolbens mindestens ein Schaltventil zum wahlweisen Absperren oder Öffnen der Hydraulikleitung angeordnet ist. Durch diese erfindungsgemäße Ausbildung kann der Druck in jedem Hydraulikreis über den jeweils mit dem Hydraulikkreis verbundenen Arbeitsraum und das geöffnete Schaltventil in das Vorratsbehältnis abgebaut werden. Dabei kann der Druck im jeweiligen Hydraulikkreis basierend auf der Druckmessung im jeweiligen Hydraulikkreis abgebaut werden. Durch zusätzliche Verwendung der Hubsteuerung des Kolbens des Doppelhubkolbens auf Basis der Druck-Volumen-Kennlinie(n) ist es auch möglich, dass durch Öffnen eines Schaltventils für eine vorbestimmte bzw. berechnete Dauer, der Druck in dem jeweiligen Hydraulikkreis und dem bzw. den daran angeschlossenen Verbraucher(n) verändert wird. Da jedem Verbraucher ein zusätzliches Schaltventil zugeordnet ist, mit dem der Verbraucher von seinem Hydraulikkreis getrennt werden kann, kann der Druck auch in weniger als allen Verbrauchern eines Hydraulikkreises abgebaut bzw. aufgebaut werden. Bei dieser Ausführungsform ist es zudem möglich, dass durch das Verstellen des Kolbens der Arbeitsraum so vergrößert wird, dass der Druck im jeweils angeschlossenen Hydraulikkreis wie vorgegebenen reduziert wird. Man spricht hierbei von einer Volumensteuerung. Um den Druck noch schneller im Hydraulikkreis und dem angeschlossenen Verbraucher(n) abzubauen, ist es selbstverständlich auch möglich, dass bei geöffnetem Schaltventil in der Hydraulikleitung zum Vorratsbehälter gleichzeitig der Arbeitsraum durch das Verstellen des Kolbens vergrößert wird. Hierdurch erhöht sich die Dynamik der Druckerzeugungseinheit erheblich.

In einer anderen Ausführungsform sind die Druckräume und/oder die hydraulischen Leitungen, welche von den Arbeitsräumen hin zu den Verbrauchern führen über eine Verbindungsleitung miteinander verbunden, wobei in der Verbindungsleitung ein Schaltventil zum wahlweise Öffnen oder Zusperren der Verbindungsleitung angeordnet ist. Bei dieser Ausführungsform muss nur ein Arbeitsraum der Kolben-Zylinder-Einheit der Druckerzeugungseinheit mittels einer Hydraulikleitung mit dem Vorratsbehältnis in Verbindung sein, wobei in der Hydraulikleitung ein Schaltventil zum wahlweisen Absperren oder Öffnen der jeweiligen Hydraulikleitung angeordnet ist. Es ist jedoch zur Erhöhung der Flexibilität der Druckerzeugungseinrichtung von Vorteil, wenn beide Arbeitsräume mit getrennten Hydraulikleitungen mit dem Vorratsbehälter verbunden sind, wobei in jeder Hydraulikleitung ein Schaltventil zum wahlweisen Öffnen oder absperren der Hydraulikleitung angeordnet ist.

Die Druckregelung kann bei den vorbeschriebenen Ausführungsformen allein durch Druckregelung mittels Kolbenverstellung des Doppelhubkolbens realisiert werden (Volumensteuerung). Ergänzend kann durch Ventilansteuerung des in der Verbindungsleitung angeordneten Schaltventils, sowie des bzw. der in den Hydraulikleitungen zum Vorratsbehälter angeordneten Schaltventilen der Druckauf und der Druckabbau gezielt gesteuert werden.

Zudem kann der Druckabbau alternativ allein durch Öffnen der Ventile zum Vorratsbehälter erfolgen, wobei dann der Druckabbau allein durch den jeweiligen Arbeitsraum der Kolben-Zylinder-Einheit erfolgt. Für eine präzise Druckregelung kann zudem ein Druckgeber genutzt werden, insbesondere für den Druckabbau aus den Nehmerzylindern der hydraulischen Verbraucher. Die Ventile zwischen den Arbeitsräumen (ShV) und dem Vorratsbehälter (PD1, PD2) ersetzen quasi die aus Bremssystemen bekannten Auslassventile und können somit auch als Druckabbauventile bezeichnet werden. Dadurch, dass der Druckabbau erfindungsgemäß über die Hydraulikleitungen erfolgt, die mittels eines Drucksensors überwacht werden, ist vorteilhaft ein druckgeregelter Druckabbau über die Druckabbauventile möglich. Dieser Druckabbau hat erhebliche Vorteile im Vergleich zu klassischen Auslassventilen, die zeitgesteuert betrieben werden, da dort dem jeweiligen Verbraucher ein Schaltventil vorgeschaltet ist und keine Druckinformation während des Druckabbaus vorhanden ist. Funktional kann auf die Druckgeber zur Regelung verzichtet werden, in dem der Druck über die Phasenstrommessung des elektrischen Antriebes über die Drehmomentkonstante kt berechnet wird. Durch eine Temperaturüberwachung des Motors und Berechnung der Temperatur der Permanentmagnete des Elektromotors bzw. Linearmotors, der den Doppelhubkolben antreibt, kann die Veränderung der Drehmomentkonstante über Temperatur, die typischerweise <10% ist, weiter verfeinert werden. Über die Flächen kann der Druck beim Linearmotor direkt berechnet werden, beim Motor-Getriebe-Antrieb muss der Wirkungsgrad des Getriebes zusätzlich berücksichtigt werden, was insbesondere bei Kugelgewindetrieben sehr hoch ist und einer geringen Schwankung unterliegt. Der Einsatz eines Druckgeber in einem Hydraulikkreis ist jedoch zum Abgleich der Druck-Volumen-Kennlinie und Kalibrierung der Druckberechnung sinnvoll. Zudem wird die Ausfallsicherheit erhöht. Alternativ können auch redundante Strommesssensoren eingesetzt werden.

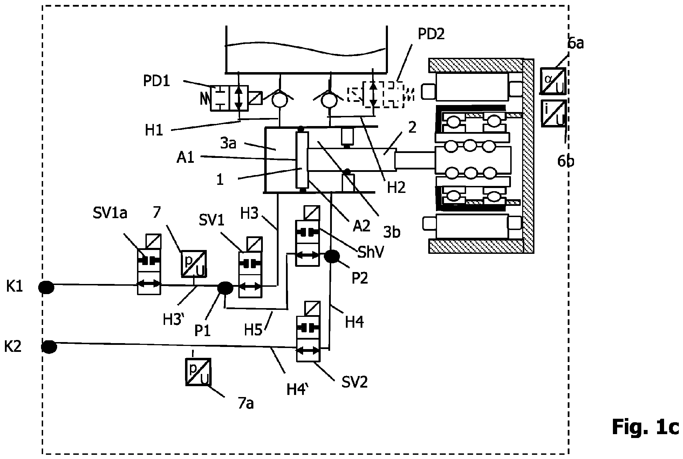

Werden zusätzlich Schaltventile an den Ausgängen des Doppelhubkolbens eingesetzt, wie dies in Figur 1c dargestellt ist, ergeben sich vorteilhaft zusätzliche Freiheitsgrade für die Druckregelung. Auch nur mit einem Druckabbauventil können annähernd alle Freiheitsgrade des Druckaufbaus und Druckabbaus, insbesondere individueller Druckaufbau und Druckabbau in jedem Kreis, gleichzeitiger Druckaufbau und Druckabbau beider Kreise, realisiert werden. Zudem kann der Motor nach der Verstellung des Kolbens entlastet werden, in dem der in einem Verbraucher gespeicherte Druck durch Schließen des Schaltventils eingeschlossen wird.

Zusätzlich kann die Wirkfläche des Kolbens der Kolben-Zylinder-Einheit zwischen vorderer und hinterer Kammer derart unterschiedlich gestaltet werden, dass der Druckvolumenbedarf für die Betätigung eines oder mehrerer Verbraucher derart angepasst wird, dass mit einem Verstellhub in Vor- oder Rückhubrichtung ein Verbraucher komplett auf 1 bar reduziert wird und die andere mit dem normalen Arbeitsdruck beaufschlagt wird, d.h. der Volumenbedarf bei der Betätigung von unterschiedlichen Nehmerkolben der Verbraucher wird durch die Flächenverhältnisse ausgeglichen, so dass der Vorhub- und Rückhubstellweg näherungsweise gleich ist.

Zudem können die unterschiedlich großen Wirkflächen der beiden Kammern des Doppelhubkolbens dahingehend genutzt werden, dass der Druckabbau im System über die Hubbewegung des Kolbens realisiert wird, ohne dass aus den Kammern der Kolben-Zylinder-Einheit Volumen an den Vorratsbehälter abgelassen werden muss. Damit kann die gespeicherte Energie vollständig genutzt werden (Feder-Masse-Schwinger-Prinzip). Für die Druckregelung und die Volumenbalance zwischen beiden Hydraulikkreisen wird dann primär das Verbindungsventil zwischen beiden Kreisen genutzt. Bei Veränderungen der Druckvolumenkennlinie, z.B. bei Dampfgasbildung, kommt es zu einer Veränderung der Volumenbilanz. In diesem Fall wird die Asymmetrie durch Nachfördern aus dem Vorratsbehälter bzw. Druckablass in den Vorratsbehälter ausgeglichen.

Dies gilt auch für den Fall, wenn ein bestimmter zeitlicher Druckverlauf gefordert ist. In diesem Fall sind beide Druckabbauventile erforderlich.

Die Umschaltung bzw. Wirkweise unterschiedlich großer hydraulischer Flächen, insbesondere zur Druckregelung beim Druckaufbau und Druckabbau, kann durch eine Verbindung der Vorder- und Rückseite des Doppelhubkolbens über ein oder mehrere Schaltventile in der Verbindungsleitung mit großen Durchflussquerschnitten sowie eine direkte Verbindung der Vorder- und Rückseite über eine kurze strömungsarme hydraulische Verbindungsleitung ermöglicht werden, die im Bereich des Endhubes des Doppelhubkolbens der einen Kammer mit dem Anfangshub des Doppelhubkolbens der zweiten Kammer verbindet. Die Verbindungslänge ist damit näherungsweise so groß wie der gesamte Hub des Doppelhubkolbens. Für eine strömungsarme Gestaltung sind der Zylinder der Kolben-Zylinder-Einheit sowie die Verbindungsleitung sinnvollerweise

Teil eines Hydraulikblockes. Die Schaltventile sind vorzugsweise ebenfalls im Hydraulikblock angeordnet. Neben dem Schaltventil in der Verbindungsleitung kann auch das mindestens eine Druckabbauventil in dem Hydraulikblock angeordnet sein.

Des Weiteren ist im Sinne der Optimierung (Downsizing des Linearaktuators) die Wahl der Querschnittsflächen zwischen Vorder- und Rückseite des Doppelhubkolbens entscheidend. Ein Verhältnis der Wirkflächen zwischen Vorderseite und Rückseite des Doppelhubkolben im Verhältnis 1,5 bis 2,5, vorzugsweise 2, ist dabei zu wählen, um ein effektives Downsizing zu erreichen. Bei einem Flächenverhältnis von 2:1 (Vordere Fläche A1/ hintere Fläche A2) kann beim Öffnen des Verbindungsventils ShV zwischen den beiden Arbeitskammern sowohl beim Vorhub auch auch beim Rückhub die hydraulisch wirksame Fläche auf den Stellmotor halbiert werden, da im Vorhub A1-A2 im Rückhub A2 wirkt. Dadurch kann das Drehmoment des Antriebsmotors halbiert werden und die Axialkraft auf das Getriebe wird halbiert. Dies ermöglicht neben der Kostenreduzierung des Motors auch ein Einsatz eines kostengünstigen Trapezspindeltriebes für die Umwandlung des Drehmoments in eine translatorische Kraft.

Ferner wird eine genaue Drucksteuerung über Wegsteuerung eines Linearaktuators sowohl beim Druckaufbau als auch optional beim Druckabbau funktional umgesetzt. Dazu wird eine Druck-Volumen(Weg)-Kennlinie über einen Drucksensor als Modell abgebildet und zur Steuerung verwendet.

Alternativ zum Linearaktuator kann der Doppelhubkolben auch über eine Motor-Getriebe-Lösung betätigt werden. In diesem nicht näher ausgeführten Fall ist ein Getriebe zwischen Motor und Doppelkolbenzugstange angeordnet, die auch eine rechtwinklige Anordnung des Doppelhubkolbens relativ zum Motor ermöglicht.

Die erfindungsgemäße Einrichtung ermöglicht, dass z.B. neben einer angeschlossenen Kupplung eine oder mehrere hydraulische Verbraucher, wie z.B. Gangsteller, mit hoher Effizienz mit Druck und Volumen versorgt werden können, wobei gleichzeitig eine genaue Regelung der Verbraucher gewährleistet ist. Primäre Anwendung sind Gangsteller eines Doppelkupplungsgetriebes in Ergänzung zur Kupplungsbetätigung.

Vorteilhafte Ausführungen bzw. Weiterbildungen der Erfindung ergeben sich durch die Merkmale der Unteransprüche.

Mit der erfindungsgemäßen Lösung bzw. ihren Ausführungsformen und Weiterbildungen können mit anderen Worten unter anderem folgende Funktionen realisiert bzw. zusammenfassend folgende Vorteile erzielt werden:
- Gleichzeitiger Druckaufbau in einem Hydraulikkreis und Druckaufbau im anderen zweiten Hydraulikkreis mit Nutzung der hydraulisch gespeicherten Energie in einem Nehmerkolben zur Entlastung der Leistungsanforderung der DHK-Druckkolbeneinheit (Feder-Masse-Prinzip);
- Gleichzeitiger Druckabbau und Druckaufbau in je einer Kammer eines Verbrauchers mit zwei hydraulischen Kammern zur Positionsregelung eines Stellers (z.B. Lenkung, Gangsteller)
- genaue Druckregelung durch Wegsteuerung statt Druckregelung über den Druck-Volumen/Weg-Zusammenhang sowohl im Druckaufbau als auch Druckabbau über den Doppelhubkolben;
- genaue Druckabbausteuerung bzw. Regelung über Doppelhubkolbenkammer und Druckabbauventil(en) unter Nutzung der Druckinformation in den Hydraulikkreisen;
- viele Freiheitsgrade der genauen Druckregelung (individueller Druckaufbau und Druckabbau in einem Kreis K1 oder mehreren Kreisen K1+K2);
- bedarfsgerechte energieeffiziente Druckerzeugung (Pressure-on-Demand) und Stromentlastung des Antriebes durch Nutzung von Schaltventilen zum Halten des eingesperrten Druckes;
- Versorgung von mehreren hydraulischen Verbrauchern, wie z.B. Kupplungen, Gangsteller, im Multiplexbetrieb (d.h. primär sequentielle oder teilsimultaner Druckregelung in mehreren Verbrauchern über Druckvolumensteuerung durch Doppelhubkolben) durch Zu- und Abschalten der Verbraucher durch magnetische Schaltventile in den jeweiligen Zuleitungen;

- sehr kompakte, kostengünstige Druckvolumen und Fördereinheit durch Downsizing des Motors/ Getriebes über Reduzierung der- Kraft bzw. des Drehmomentes des Elektromotors über zwei schaltbare hydraulische Querschnittsflächen über ein Verbindungsventil (ShV); somit Einsatz von kleineren Motoren und kostengünstigeren Trapezspindeln, die im Motor integriert sind.
- sehr hohe Freiheitsgrade bei Optimierung von hydraulischen Systemen (Wegfall aufwändiger Druckabbauregelverfahren, Drucksensoren mehrerer Stellmotoren, Anschluss von mehreren Verbrauchern an eine elektrisch betätigte Hydraulikquelle).

Durch die Freiheitsgrade und genaue Druckregelung können Ventilschaltungen von Verbrauchern vereinfacht werden, z.B. Ersatz aufwändiger Proportionalventile durch einfache Magnetventile. Zudem kann der Linearantrieb der Kolben-Zylinder-Einheit der Druckerzeugungseinrichtung durch die schaltbaren Wirkflächen signifikant vereinfacht werden und die Freiheitsgrade können dahingehend genutzt werden, dass eine Vielzahl von Verbrauchern an die Druckerzeugungseinrichtung angeschlossen werden. Eine Redundanz kann dadurch geschaffen werden, in dem der Antriebsmotor mit einer redundanten 6-Phasenwicklung und einer redundanten Ansteuerung vorgesehen wird und bei Ausfall eines Hydraulikkreises der zweite Hydraulikkreis noch genutzt werden kann.

### Figurenbeschreibung

Verschiedene mögliche Ausführungsformen der erfindungsgemäßen Druckerzeugungseinrichtung werden nachfolgend anhand von Zeichnungen näher erläutert.

Es zeigen:
- **Fig. 1a**: Grundaufbau einer Druckerzeugungseinrichtung mit Doppelhubkolben, nachfolgend auch DHK-Druckregeleinheit genannt, mit Motor-Getriebeeinheit für die Druckversorgung von zwei Hydraulikkreisen mit Druckabbauventilen;
- **Fig. 1b:**: Grundaufbau der DHK-Druckregeleinheit mit Motor-Getriebeeinheit für die Druckversorgung von zwei Hydraulikkreisen mit Druckabbauventilen und Shifting-Ventil;
- **Fig. 1c:**: Grundaufbau der DHK-Druckregeleinheit mit Motor-Getriebeeinheit für die Druckversorgung von zwei Hydraulikkreisen mit einem, alternativ zwei Druckabbauventilen sowie Schaltventilen in den Hydraulikkreisen für weitere Freiheitsgrade in der Druckregelung;
- **Fig. 2:**: Grundaufbau der Druckerzeugungseinrichtung mit Linearantrieb ohne Getriebe;
- **Fig. 3a:**: Druckregelverfahren unter Berücksichtigung der schaltbaren Flächen;
- **Fig. 3b:**: Druckregelverfahren bei der Kupplungsbetätigung mit unterschiedlichen Verbrauchers bzw. hydraulische wirksamen Querschnittsflächen;
- **Fig. 4:**: Einsatz der Druckerzeugungseinrichtung als Kolbensteller für zwei hydraulische Verbraucher (insbesondere Kupplungen) mit zusätzlichem Einsatz von ShV-Ventil und Schaltventilen an den Verbrauchern für Multiplexbetrieb;

- **Fig. 5**:: Einsatz der Druckerzeugungseinrichtung als Kolbensteller sowie Schaltsteller für mehr als 2 Verbraucher (insbesondere 2 Kupplungen und zwei Schaltsteller mit Druckregelung der Kupplung und der Schaltsteller im Multiplexverfahren);
- **Fig. 6:**: Einsatz der Druckregeleinheit als Kupplungssteller und - Schaltsteller für Verbraucher mit zwei hydraulischen Wirkflächen (z.B. Gangsteller, Lenkung) sowie optional weiterer Verbraucher mit Multiplexbetrieb

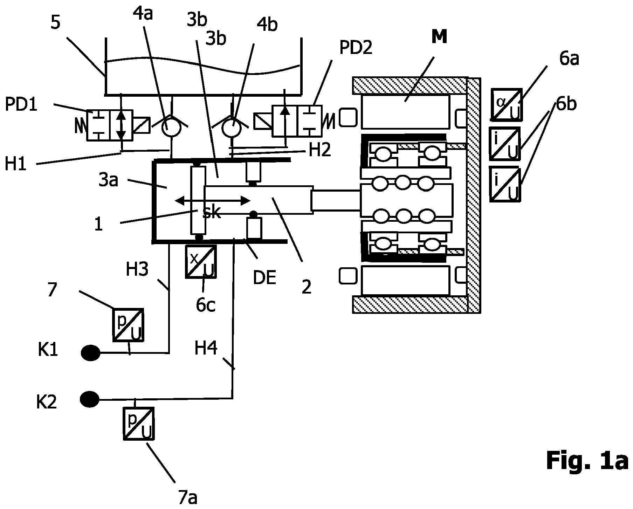

**Fig.1a** zeigt den Grundaufbau einer ersten möglichen Ausführungsform der erfindungsgemäßen Druckerzeugungseinrichtung, welche auch als Druckregel- und Volumenfördereinheit, nachfolgend auch DHK-Druckregeleinheit, bezeichnet werden kann. Diese weist einen beidseitig wirkenden Kolben 1, nachfolgend auch Doppelhubkolben DHK genannt, der über eine Druckstange 2 mit einem Linearantrieb, bestehend aus Elektromotor M und Getriebe, welches insbesondere ein Kugelgewindegetriebe ist, in beide Richtungen über den Weg sk verschoben werden kann. Am Stellmotor M sind Winkelgeber 6a und Phasenstrommesssensor(en) 6b vorgesehen. Alternativ zum Winkelgeber kann ein Sensor direkt zur Bestimmung der Kolbenhubposition (6c) eingesetzt werden.

Dies ist insbesondere bei Schlupf im Getriebe hilfreich zur Verbesserung der-Postionsregelung. Der Doppelhubkolben 1 begrenzt einen ersten Arbeitsraum bzw. Druckkammer 3a und einen zweiten Arbeitsraum bzw. Druckkammer 3b.

Beide Arbeitsräume 3a, 3b sind über Rückschlagventile 4a und 4b mit einem Vorratsbehälter 5 verbunden. Die Rückschlagventile 4a, 4b weisen einen großen Öffnungsquerschnitt auf, damit eine Drosselwirkung vermieden wird.

Die Druckerzeugungseinrichtung regelt den Druck in den beiden hydrautischen Kreisen K1 und K2. In den Zuleitungen H3, H4 zwischen den Arbeitsräumen 3a, 3b und den hydraulischen Kreisen K1 und K2 sind Druckgeber 7 und 7a angeordnet. Auf die Druckgeber 7 oder 7a kann für die Regelung verzichtet werden, indem über die Phasenstrommessung das Drehmoment des Motors M berechnet wird und über die wirksame Querschnittsfläche der Systemdruck in der Hydraulikleitung H3, H4 berechnet wird, in der kein Druckgeber vorgesehen ist. Aus Sicherheitsüberlegungen und zur Kalibrierung der Druckvolumenkennlinie ist jedoch zumindest ein Druckgeber sinnvoll. Auch kann die Phasenstrommessung redundant ausgeführt werden, um auf die Druckgeber komplett verzichten zu können.

Zudem sind zwei schaltbare Ventile PD1 oder PD2 vorgesehen, die auch als Druckabbauventile bezeichnet werden können, welche in der den jeweiligen Arbeitsraum 3a, 3b mit dem Vorratsbehälter 5 verbindenden Hydraulikleitung H1, H2 angeordnet sind. Damit ist ein Druckabbau aus beiden Arbeitsräumen 3a, 3b in den Vorratsbehälter 5 möglich. Durch Öffnen eines oder beider Ventile PD1 oder PD2 kann bei Vor- oder Rückhub über Wegsteuerung sk oder Stillstellung des Doppelhubkolbens 1 der Druck kontrolliert abgebaut werden. Für die Druckabbauregelung wird dabei zumindest einer der beiden Druckgeber 7, 7a oder die Strommessung verwendet. Dies ist insbesondere vorteilhaft gegenüber einer Druckregelung über klassische Auslassventile mit PWM-Betrieb, da der Druck mit einer hohen Genauigkeit kontrolliert abgebaut werden kann. Bei klassischen Auslassregelung mit vorgeschalteten geschlossenen Schaltventilen Ventilen (z.B. Auslassventil zwischen SV1 und Verbraucher V1 bzw. Auslassventil zwischen Verbraucher V2 und SV2, Verweis auf Fig. 4) ist diese Druckregelgenauigkeit nicht möglich, da kein Druckgeber zur Druckabbauregelung in einer derartigen Anordnung wie üblich bei Bremsregelsystemen verwendet werden kann.

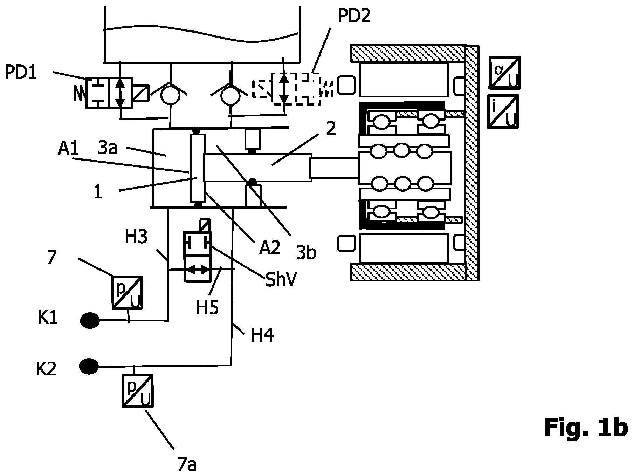

**Fig.1b** zeigt eine weitere mögliche Ausführungsform der erfindungsgemäßen Druckerzeugungseinrichtung, bei der der Arbeitsraum 3a mit der Wirkfläche A1 und der zweite Arbeitsraum 3b mit der Wirkfläche A2 des Kolbens 1 begrenzt ist. Das Verhältnis der Flächen A1 und A2 ist näherungsweise 2:1, mindestens jedoch 1,5:1 und maximal 2,5:1. Zusätzlich ist zwischen den Kammern 3a, 3b ein schaltbares Druckausgleichsventil ShV angeordnet. Das schaltbare Ventil ShV ist bei hochdynamischen Systemen als Schaltventil ohne Drosselfunktion ausgeführt und weist demzufolge einen großen Durchflussquerschnitt auf. Die die Druckkammern 3a, 3b bzw. die von diesen zu den Verbrauchern führenden hydraulischen Leitungen H3, H4 verbindende, das Schaltventil ShV enthaltende Verbindungsleitung ist möglichst kurz und beginnt zumindest an einer Druckkammer möglichst unmittelbar am Ausgang der Kolben-Zylinder-Einheit. Insbesondere sollen den Strömungswiderstand erhöhende Elemente, wie zusätzliche Ventile etc., in diesem Bereich möglichst vermieden werden. Alternativ können statt einem Schaltventil ShV auch mehrere Schaltventile parallel in der Verbindungsleitung H5 geschaltet sein. Durch eine derartige Parallelschaltung können Standardventile aus der Großserienfertigung eingesetzt werden. Durch Schalten des Druckausgleichsventils ShV kann eine Verbindung zwischen Vorder- und Rückseite des Doppelhubkolbens 1 herstellt werden und beim Kolbenhub unterschiedliche Wirkflächen durch Druckausgleich realisiert werden. Bei einem weniger dynamischen System bzw. Einsatz weniger Verbraucher im System ist der Durchflussquerschnitt des Schaltventiles ShV und der Strömungswiderstand der hydraulischen Leitungen, die die Arbeitskammern des Doppelhubkolben verbinden weniger relevant und die Verbindung kann auch über mehrere Ventile z.B. im Hydraulikkreis erfolgen.

Durch die Druckerzeugungseinrichtung werden zwei hydraulische Kreise K1 und K2 versorgt. Bei geschlossenem Ventil ShV wird im Vorhub der Kreis 1 und im Rückhub der Kreis 2 mit Druck versorgt. Bei offenem Ventil ShV wird im Vor- und Rückhub sowohl Kreis K1 und Kreis K2 gemeinsam versorgt mit der wirksamen Fläche A1-A2 (im Vorhub) bzw. A2 (im Rückhub). Der Druck in zumindest einer Hydraulikleitung H3, H4 wird mittels eines Druckgebers 7, optional auch mittels der beiden Druckgeber 7, 7a ermittelt. Auf einen Druckgeber kann für die Regelung verzichtet werden, wenn über die Phasenstrommessung das Drehmoment des Motors M berechnet und über die wirksame Querschnittsfläche der Systemdruck berechnet wird.

**Fig.1c** stellt eine Erweiterung der Druckerzeugungseinrichtung aus Fig.1b dar, wobei weitere Schaltventile SV1, SV1a und SV2 in den Hydraulikleitungen H3, H4 vorgesehen sind. In dieser Schaltung sind an den Ausgängen der vorderen Kammer 3a und hinteren Kammer 3b die Schaltventile SV1 und SV2 angeordnet und das Schaltventil ShV verbindet direkt den Hydraulikkreis K1 mit der Kammer 3b. Das Schaltventil SV1a ist dann vor der Verbindungsleitung H5 und dem Hydraulikkreis K1 angeordnet.

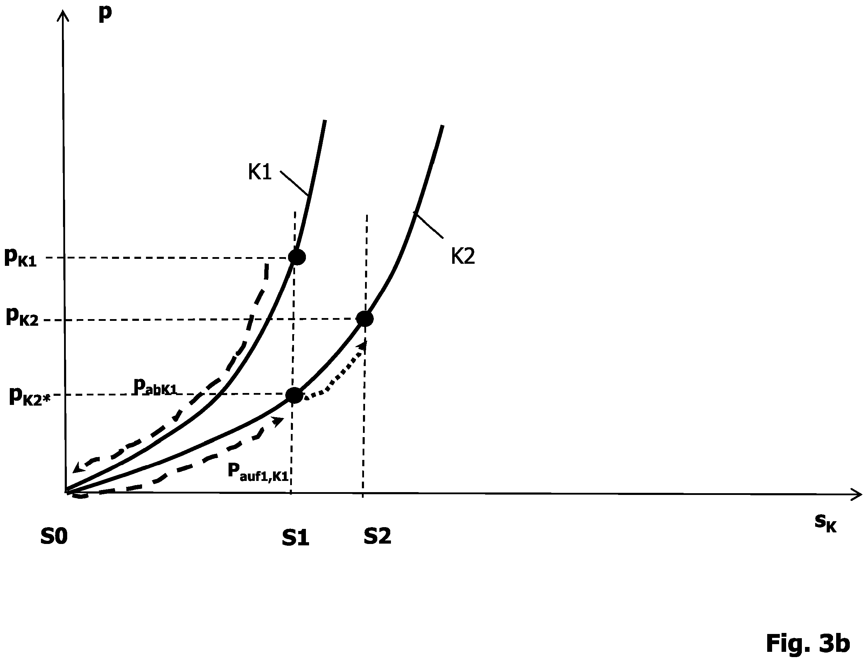

Diese Erweiterung bewirkt einen größeren Funktionsumfang für die Regelung der Verbraucher. Dabei hat der Doppelhubkolben 1 über die Hubsteuerung, teilweise unter Nutzung der Druckvolumenkennlinie und des Druckgebers 7a und 7b (siehe Ausführung Fig. 3b) in dieser Ausführungsform die folgenden Freiheitsgrade:
- Druckaufbau individuell in Kreis K1 und Kreis K2;
- Druckaufbau gemeinsam in Kreis K1 und Kreis K2;
- Druckabbau individuell in Kreis K1 und Kreis K2;
- Druckabbau gemeinsam in Kreis K1 und Kreis K2;
- gleichzeitiger Druckaufbau in Kreis 1 und Druckabbau in Kreis 2;
- gleichzeitiger Druckaufbau in Kreis 2 und Druckabbau in Kreis 1;

Für die Umsetzung dieser Funktionen werden die Ventile in Fig. 1c wie folgt geschaltet. Hierbei sei angemerkt, dass auf das Ventil PD2 sowie die Hydraulikleitung H2 für die nachfolgend beschriebenen Regelungen auch verzichtet werden kann, da es in den aufgeführten Funktionen immer geschlossen betrieben wird und daher in der Funktion einem Rückschlagventil entspricht

| | Druckaufbau P_{auf} K1 | | Druckaufbau p_{auf} K2 | |
|---|---|---|---|---|
| DHK-Hubrichtung | Vorhub | Rückhub | Vorhub | Rückhub |
| ShV | 0 | **1** | Mit Schaltung Fig. 1b | 0 |
| SV1 | **1** | 0 | | 0 |
| SV2 | 0 | 0 | | **1** |
| PD1 | 0 | 0 | | 0 |
| PD2 | 0 | 0 | ShV, SV2 offen | 0 |

| | Druckabbau p_{ab} K1 | | Druckabbau p_{ab} K2 | |
|---|---|---|---|---|
| DHK-Hubrichtung | Vorhub | Rückhub | Vorhub | Rückhub |
| ShV | 1 | **1** | 0 | Mit Schaltung (SV1 am Verbraucher)SV2 und ShV offen |
| SV1 | 0 | **1** | 0 | |
| SV2 | 0 | 0 | **1** | |
| PD1 | 1 | 0 | **1** | |
| PD2 | 0 | 0 | 0 | |

| | Druckabbau p_{auf} K1+K2 | | Druckabbau p_{ab} K1+K2 | |
|---|---|---|---|---|
| DHK-Hubrichtung | Vorhub | Rückhub | Vorhub | Rückhub |
| ShV | **1** | **1** | **1** | **1** |
| SV1 | **1** | 0 | **1** | 0 |
| SV2 | **1** | **1** | **1** | **1** |
| PD1 | 0 | 0 | 0 | **1** |
| PD2 | 0 | 0 | 0 | 0 |

| | | | | |
|---|---|---|---|---|
| Bezeichnungen: **0: Ventil geschlossen** **1: Ventil geöffnet** | | | | |

Weitere Freiheitsgrade des gleichzeitigen geregelten Druckauf- und Druckabbau können genutzt werden, wenn sowohl das Ventil PD1 als auch das Ventil PD2 vorgesehen und verwendet werden. Damit kann zusätzlich zu den oben genannten Möglichkeiten der Druck in jeweils einem der beiden Hydraulikkreise K1, K2 oder auch in beiden Hydraulikkreisen K1 und K2 druckgeregelt über die Kammern 3a, 3b des Doppelhubkolbens unter Verwendung der Druckgeber 7 und 7a und der Ventile PD1, PD2 gesteuert abgebaut werden.

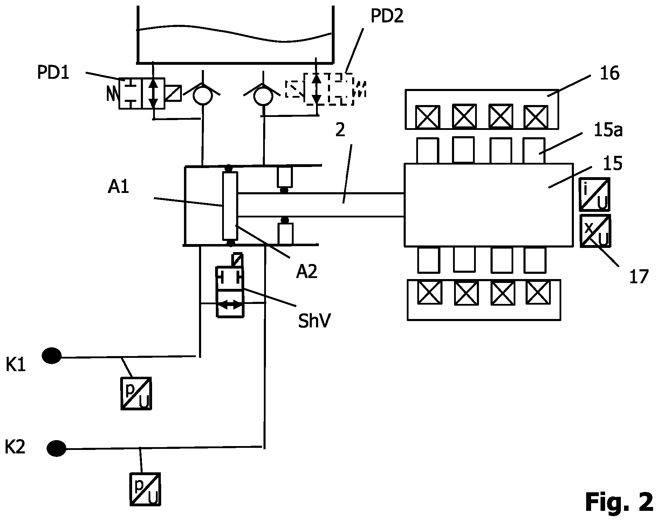

**Fig.2** beschreibt die gleiche Druckerzeugungseinrichtung wie Fig. 1a mit dem Unterschied, dass der Druckstangenkolben 2 über einen Linearaktor betätigbar ist, bestehend aus einen Anker 15 mit Permanentmagneten 15a, einem Stator mit Erregerspulen 16 und einen Linearwegsensor 17. Die Funktion ist die gleiche wie bei Fig.1a. Linearaktoren haben Vorteile im Vergleich zu Motor-Gewindetrieben, wenn der Doppelhubkolben auf kleine Hübe ausgelegt ist und geringe Kräfte im System auftreten. Optional wird das Verbindungsventil ShV eingesetzt, dass die gleiche Wirkweise hat wie in Fig. 1b beschrieben.

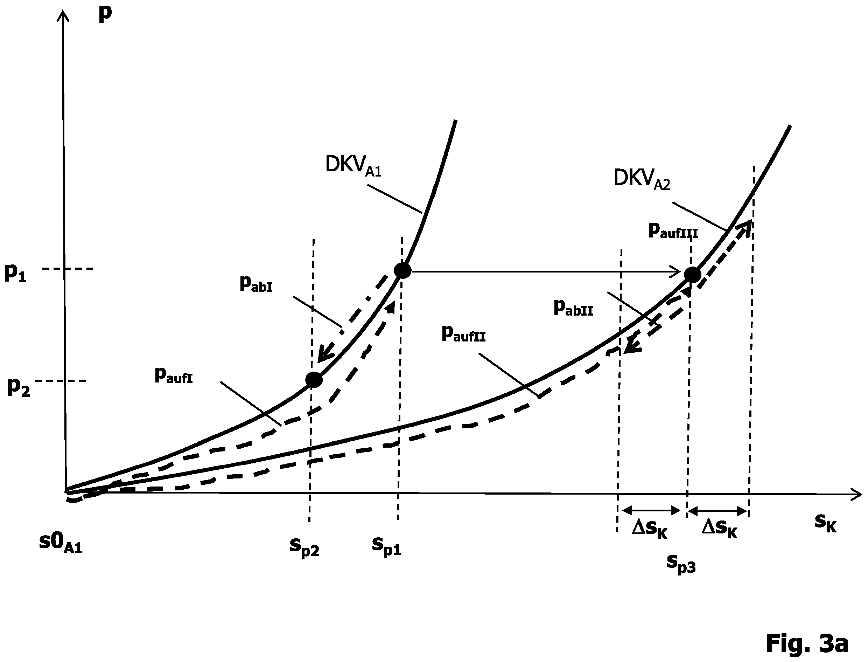

**Fig.3a** beschreibt die Regelstrategie zur genauen Druckregelung über Abbildung einer Druck-Volumen (Weg)-Kennlinie in einem Zusammenhang zwischen Druckstangenweg sk und Druck p. Zur Abbildung der Druckvolumenkennlinie wird der Drucksensor 7 der Figuren 1a, 1b, 1c genutzt. Im Betrieb kann die Druckvolumenkennlinie abgeglichen werden.

Dieses Verfahren wird insbesondere beim Druckaufbau und Druckabbau von Kupplungsstellern und weiteren Verbrauchern, wie z.B. Gangstellern, genutzt, wenn kein gleichzeitiger Druckaufbau und Druckabbau erforderlich ist, d.h. entweder eine Kupplung oder ein Gangsteller betrieben in sequentieller Reihenfolge wird.

Ein Verhältnis der Kammerflächen des Doppelhubkolbens von näherungsweise A1/A2=2 ist in der Darstellung zugrunde gelegt. Der Druckaufbau beginnt von einem Ausgangsdruck s0_{A1} . Ein gewünschter Regeldruck p1 wird eingestellt durch Aussteuerung des Linearaktuators beim Druckaufbau p_{aufI} mit Fläche A1 z.B. im Vorhub bis zur Position Sₚ₁, beim Druckaufbau p_{aufII} mit Fläche A2 z.B. im Rückhub bis zur Position Sp₃. Bei der Regelung wird die Druck-Weg-Kennlinie zugrunde gelegt, die den nichtlinearen Zusammenhang zwischen Druck und Weg abbildet. Es können auch geringere Drücke als p1 über die Druckwegkennlinie eingesteuert werden. Bei Umschalten auf die Wirkfläche A2 verschiebt sich die Druckvolumenkennlinie. Es ergibt sich ein neuer Referenzweg sₚ₃. Druckänderungen können durch Einstellen von Differenzwegen Dsk eingestellt werden. Die weggesteuerte Druckregelstrategie hat den Vorteil, dass der Druck deutlich besser eingestellt werden kann, wenn die Regelung über Hub erfolgt und nicht über Nutzung des Drucksensors, da damit Druckschwingungen und Elastizitäten der Druckleitung nicht als Störgrößen die Regelung beeinflussen und keine hohen Anforderungen an die Genauigkeit von Druckgebern gestellt werden müssen.

Wird die Druckregeleinheit gemäß Fig.1b eingesetzt, d.h. mit Druckabbauventil PD1, kann über die Wegsteuerung sk der Druck auch im Abbau über den Druck-Weg-Zusammenhang geregelt werden (p_{abI}). Dazu wird der Kolben 1 im Rückhub betrieben. Dabei muss dafür gesorgt werden, dass das Volumen in der zweiten Kammer 3b nicht komprimiert wird, d.h. über PD2 in den Vorratsbehälter entweichen kann. Ein vergleichbarer Druckabbau (p_{abII}) kann auch im Vorhub bei kleinerer Wirkfläche geregelt werden. Dazu wird das Volumen über Vorratsbehälter PD2 in den Vorratsbehälter abgelassen. Ein gleicher Effekt im Druckabbauverfahren p_{abII} wird erzielt, wenn im Rückhub das ShV-Ventil geöffnet ist. Dann ist kein PD1 oder PD2-Ventil zum Druckabbau erforderlich.

Das verdrängte Volumen wird von der hinteren Kammer 3b in die vordere Kammer des Doppelhubkolbens gefördert.

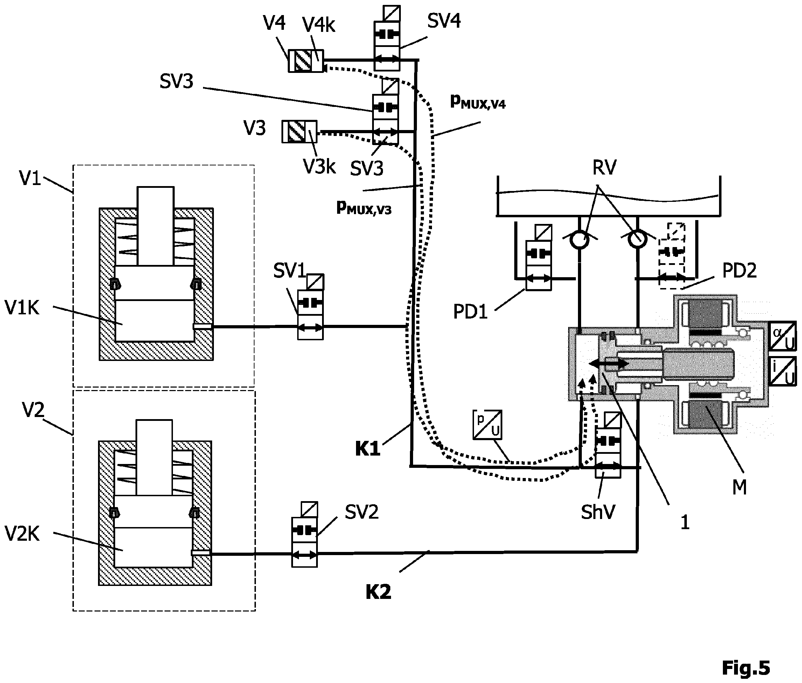

**Fig.3b** beschreibt das Regelverfahren bei gleichzeitigem Druckaufbau und Druckabbau über beide Kammern des DHK (z.B. bei der Betätigung von 2 Kupplungen im Systemaufbau gemäß Fig. 5). Dort sind leicht unterschiedliche Druckvolumenkennlinien zweier Nehmerkolben zugrunde gelegt bzw. alternative gleiche Druckvolumenkennlinien der Nehmerkolben und eine Doppelhubkolbenauslegung mit einem Flächenverhältnis der hydraulischen Flächen A1/A2 = S2/S1.

Dazu wird ausgehend von der Position S1 der Kolben im Rückhub von der Position S1 zur Position S2 verstellt. Der Druck der Kupplung K1 wird vom Betriebsdruck p_{K1} auf annähernd Null reduziert, während gleichzeitig der Druck in Kupplung K2 von annähernd Null auf p_{K2} erhöht wird. Danach wird der Steller weiter bewegt bis zur Stellung S2, bis der Betriebsdruck pK2 erreicht wird. In der Rückhubbewegung wird das fehlende Volumen aus der Vorratskammer über die Rückschlagventile in die vordere Kammer des DHK gefördert, um Unterdruck zu vermeiden. Dieses Verfahren hat gegenüber einem sequentiellen Verfahren den signifikanten Vorteil, dass die eine Kupplung K1 sehr schnell gelöst werden kann, während gleichzeitig die Kupplung K2 angelegt wird.

Dies ist insbesondere für einen Schaltvorgang mit minimalen zeitlichem Verzug, was bei einem Doppelkupplungssystem gefordert ist, erreicht. Zudem kann der Druck in einer Kupplung als Energiequelle genutzt werden, so dass ein Antriebsmotor mit minimalen Leistungsbedarf nur erforderlich ist, bzw. die Dynamik des Schaltvorganges gegenüber einem 2-Aktuatorsystem bei gleichem Motor im Schaltvorgang signifikant verbessert werden kann, da die gespeicherte hydraulische Energie im Schaltvorgang genutzt werden kann. Durch Einsatz eines ShV-Ventils und entsprechender Ansteuerung kann zudem die Steuerung optimiert werden, z.B. dass der Loslösvorgang einer Kupplung K1 mit dem Anlegevorgang der zweiten Kupplung synchronisiert wird, d.h. mit einem Verstellweg in der Mitte zwischen S1 und S2 (d.h. S=0,5^{∗}(S1+S2) der Vorgang abgeschlossen wird.

Insbesondere beim umgekehrten Vorgang (d.h. Kupplung K2 wird vom Betriebsdruck pK2 gelöst durch einen Verstellweg S2), ist der Einsatz des AV-Ventils sinnvoll, ansonsten wird der Betriebsdruck pK1 von Kupplung K1 überschritten. Abhilfe bietet zudem der Einsatz von Ablassventilen (PD1 oder PD2) bzw. weiterer Auslassventile im System. Hier kommt dem PD1-Ventil eine Bedeutung zu, da der Druckabbau in Kupplung K1 über das Ablassventil PD1 unter Verwendung des Druckgebers in K1 genau gesteuert werden kann, auch ohne Verwendung eines ShV-Ventils. PD1 und ShV sind daher Alternativen und nicht zwingend beide erforderlich. Das PD2-Ventil hat eine ähnliche Bedeutung, wenn das Flächenverhältnis A1/A2 annähernd gleich ist und der Kupplungssteller K2 ein größeres Volumen aufweist.

Alternativ zur Druckversorgereinheit kann auch die DHK-Druckversorgereinheit mit einer Ventilschaltung wie in Fig.2 erläutert eingesetzt werden.

**Fig. 4** stellt die eine Ausführungsform der Druckerzeugungseinrichtung gemäß der

Ausführung in Fig.1b dar, in der das Potential des Doppelhubkolbens 1 genutzt wird. Die Druckerzeugungseinrichtung kann auch in der Ausgestaltungsform gemäß Fig.1c eingesetzt werden, in der die Schaltventile SV1 und SV2 Bestandteil der Druckversorgereinheit sind (SV1a=SV1, SV2=SV2). Jeder Arbeitsraum 3a, 3b ist mit einem Nehmerzylinder V1K, V2K der beiden Kupplungen V1 und V2 verbunden. Diese Systemgestaltung ermöglicht den Druckabbau der Kupplung V1 (p_{abK1}) über die vordere Kammer 3a des Doppelhubkolbens während gleichzeitig der Druckaufbau in der Kupplung V2 (p_{aufK2}) über Verstellung in Rückhubrichtung des Doppelhubkolbens erfolgt. Der gleichzeitige Druckaufbau und Druckabbau kann auch in Vorhubrichtung erfolgen. In diesem Fall wird durch Vorhubbewegung des Doppelhubkolbens der Druck im Verbraucher V2 abgebaut und in Verbraucher V1 aufgebaut. Unterstützend kann sowohl PD1 als auch PD2 zur Druckabbauregelung verwendet werden. Das ShV-Ventil kann ebenfalls zum Druckabbau- als auch für die Druckaufbauegelung geöffnet werden und den über die Bewegung des Doppelhubkolbens sich veränderlichen Druck beeinflusst werden, in dem die Kreise K1 und K2 verbunden werden.

Alternativ zur Druckversorgereinheit kann auch die Druckerzeugungseinrichtung mit einer Ventilschaltung wie in Fig.2 erläutert eingesetzt werden. Die Ventilschaltung der Fig.2 kann auch vergleichbar wie Fig.1b auf Fig.1c angepasst werden. Das gleiche gilt für die folgenden Systembeschreibungen in Fig. 5 und 6.

**Fig. 5** zeigt eine Erweiterung des in Fig. 4 beschriebenen Systems für die zusätzliche Betätigung von mehreren Verbrauchern V3, V4 bei gleichzeitigem Verzicht auf einen Druckgeber im Kreis K2. Alternativ ist auch ein Druckgeber im Kreis K2 möglich und im Kreis K1 wird auf den Druckgeber verzichtet. Dazu sind für jeden Verbraucher V1-V4 Schaltventile SV1, SV2, SV3, SV4 vorgesehen. Die Gangsteller werden im sog. Multiplexverfahren gesteuert, d.h. Betätigung von hydraulischen Verbrauchern VS3 oder VS4 sind die stromlos offenen Schaltventile der Kupplungssteller geschlossen, so dass der Druck durch Bestromung der Magnetventile gehalten wird bzw. nicht über die Betätigung Druck aufgebaut wird. Der Druck des Nehmerkolbens des Verbrauchers V3 bzw. V4 wird wie bereits beschrieben über den Doppelhubkolben unter Berücksichtigung der Druckvolumenkennlinie auf- oder abgebaut (p_{MUX,V3}, p_{MUX,V4}). Ist der Druck erreicht, wird das Schaltventil SV3 bzw. SV4 geschlossen und in einem nachfolgenden Ablauf kann ein weiterer Verbraucher betätigt werden. Dieses Verfahren wird in der Regel insbesondere beim Einsatz von Gangsteller sequentiell durchgeführt, da keine gleichzeitige Bestätigung von Gangsteller erfolgt und zudem der Gangstellvorgang nicht zeitgleich zum Kupplungsbetätigungsvorgang stattfindet. Das Verfahren bietet jedoch die Möglichkeit des simultanen bzw. teilsimultanen Druckaufbau und Druckabbau, wie aus dem Multiplexbetrieb des Erfinders bekannt.

Durch die Erweiterung des Kupplungsbetätigungssystems auf weitere Verbraucher kann das System signifikant vereinfacht werden gegenüber herkömmlichen Doppelkupplungssystemen, bei dem für jeden Gangsteller und jede Kupplung ein Antriebsmechanismus vorgesehen ist. Da Schaltventile, auch mit geringem Strömungswiderstand vergleichsweise günstig und leicht sind, kann damit eine signifikante Kosten- und Gewichtsreduzierung erreicht werden. **Fig. 6** zeigt eine Alternative zu Fig. 5, in dem im Multiplexbetrieb 2 Kammern V1K1 und V1K2 eines Verbrauchers V1 neben einem zweiten Verbraucher V2 mit der erfindungsgemäßen Druckerzeugungseinrichtung mit Druck beaufschlagt werden. Im Gegensatz zu Fig.5 ist der Kolben des Verbrauchers V1 in beide Richtungen verstellbar, wobei bei der Verstellung des Kolbens in V1 beide Hydraulikkreise K1 und K2 genutzt werden, in dem in einer Kammer des Doppelhubkolbens Druck abgebaut wird und durch Verschiebung des Kolbens in einer anderen Kammer Druck aufgebaut wird. Zur Regelung werden die Ventile PD1, PD2 oder SHV zusätzlich genutzt, wobei nur maximal 2 Ventile zur Regelung erforderlich sind. Es kann auch ein Auslassventil AV_{K3} zwischen einer Hydraulikammer eines Verbrauchers, hier exemplarisch für den Verbraucher V3 dargestellt und dem jeweiligen Schaltventile SV3 angeschlossen werden, über das der Druck aus der Kammer V3k über eine gesonderte Hydraulikleitung H8 unmittelbar zum Vorratsbehältnis 5 abgeleitet werden kann, wobei die beschriebenen Nachteile in Kauf zu nehmen sind.

In dieser Ausführung wird der Druck in der Kammer V1K2 oder V1K2 mit Druck versorgt und der Kolben mit der erfindungsgemäßen Druckregelmethode sehr genau verstellt. In der Anwendung können die Verbraucher beispielsweise eine Lenkung oder Gangsteller (V1) als auch eine Kupplung (V2) darstellen.

An die Hydraulikkreise K1 und K2 können weitere Verbraucher V3, V4 mit vorgeschalteten Schaltventilen SV4 und SV5 mit Wirkprinzip der Verbraucher V1 bzw. V2 angeschlossen werden und im Multiplexbetrieb betrieben werden. So kann beispielweise ein komplettes Doppelkupplungsgetriebe (mit 2 Kupplungen, 4 Gangsteller) bzw. eine mehrere Kupplungen sowie eine Lenkung mit einer Druckversorgereinheit betrieben werden bzw. andere hydraulische Systeme mit einem zentralen Steller mit Druck versorgt werden (z.B. elektrohydraulischer Ventiltrieb).

### Bezugszeichenliste

- 1: Kolben beidseitig wirkend bzw. Doppelhubkolben
- 2: Druckstangenkolben
- 3a: Kammer
- 4a: Rückschlagventil
- 4b: Rückschlagventil
- 5: Vorratsbehälter
- 6a: Winkelgeber
- 6b: Phasenstrommesssensor
- 6c: Kolbenpositionssensor
- 7,7a: Druckgeber
- 15: Anker
- 15a: Permanentmagnete
- 16: Stator mit Erregerspulen
- 17: Linearwegsensor
- AV: Druckausgleichsventil schaltbar
- K1: hydraulischer Kreis
- K2: hydraulischer Kreis
- ShV: Schaltventil
- SiV: Sicherheitsventil
- Sk: Weg
- TV: Trennventil
- V1: Verbraucher
- V2: Verbraucher
- V3: Verbraucher bzw. Kupplungsbetätigung
- V4: Verbraucher bzw. Bremssystem

## Patentansprüche

1. Druckerzeugungseinrichtung mit einer Kolben-Zylinder-Einheit (DE), die einen beidseitig wirkenden Kolben (1) aufweist, der zwei Arbeitsräume (3a, 3b) im Zylinder voneinander abdichtend trennt, wobei der Kolben (1) zwei, insbesondere unterschiedlich große, Wirkflächen (A1, A2) aufweist und jede Wirkfläche (A1, A2) des Kolbens (1) jeweils einen Arbeitsraum (3a, 3b) begrenzt, wobei jeder Arbeitsraum (3a, 3b) über eine hydraulische Leitung (H3, H4) mit einem hydraulischen Kreis (K1, K2) in Verbindung ist, wobei an jedem hydraulischen Kreis (K1, K2) mindestens eine hydraulische Kammer eines Verbrauchers (V1, V1K1, V1K2, V2K, V3K, V4K) angeschlossen ist, wobei ein Antrieb (M) den Kolben (1) der Kolben-Zylinder-Einheit (DE) antreibt, **dadurch gekennzeichnet, dass** entweder
- jeder Arbeitsraum (3a, 3b) mittels einer Hydraulikleitung (H1, H2) mit einem Vorratsbehältnis (5) für ein Hydraulikmedium in Verbindung ist, wobei in jeder Hydraulikleitung (H1, H2) mindestens ein Schaltventil (PD1, PD2) zum wahlweisen Absperren oder Öffnen der Hydraulikleitung (H1, H2) angeordnet ist, wobei der Druck aus einem Hydraulikkreis (K1, K2) bei geöffnetem Schaltventil (PD1, PD2) über den jeweiligen Arbeitsraum (3a,3b) und die jeweilige Hydraulikleitung (H3, H4) in den Vorratsbehälter (5) abgebaut wird;
oder dass
- einer oder beide Arbeitsräume (3a, 3b) mittels einer Hydraulikleitung (H1, H2) mit einem Vorratsbehältnis (5) für ein Hydraulikmedium in Verbindung ist bzw. sind, wobei in der einen oder in beiden Hydraulikleitung(en) (H1, H2) ein Schaltventil (PD1, PD2) zum wahlweisen Absperren oder Öffnen der Hydraulikleitung (H1, H2) angeordnet ist, und wobei der Druck aus einem Hydraulikkreis (K1, K2) bei geöffnetem Schaltventil (PD1, PD2) über den jeweiligen Arbeitsraum (3a,3b) und die jeweilige Hydraulikleitung (H3, H4) in den Vorratsbehälter (5) abgebaut wird; und/oder eine oder mehrere hydraulische Kammern der Verbraucher jeweils ein Auslassventil (AVi) zum direkten Druckabbau aus der jeweiligen Kammer in das Vorratsbehältnis (5) zugeordnet ist bzw. sind, und dass die Druckräume (3a, 3b) und/oder die hydraulischen Leitungen (H3, H4) über eine Verbindungsleitung (H5) miteinander verbunden sind, wobei in der Verbindungsleitung (H5) ein Schaltventil (ShV) zum wahlweise Öffnen oder Zusperren der Verbindungsleitung (H5) angeordnet ist.

2. Druckerzeugungseinrichtung nach Anspruch 1, **dadurch gekennzeichnet, dass** der Antrieb der Kolben-Zylinder-Einheit (DE) einen Linearaktuator, insbesondere Linearmotor (15, 16) oder Rotationsmotor (10, 11, 12) und Getriebe aufweist.

3. Druckerzeugereinrichtung nach Anspruch 1, **dadurch gekennzeichnet, dass** nur der vordere Arbeitsraum (3a) über ein Ventil (PD1) mit dem Vorratsbehälter verbunden bzw. verbindbar ist oder beide Arbeitsräume (3a,3b) über Ventile (PD1, PD2) mit dem Vorratsbehälter verbunden bzw. verbindbar sind.

4. Druckerzeugungseinrichtung nach Anspruch 1, **dadurch gekennzeichnet, dass** die Wirkflächen (A1, A2) unterschiedlich sind und in einem Verhältnis von 1,5 zu 1 bis 2,5 zu 1, insbesondere 2 zu 1 zueinander stehen.

5. Druckerzeugungseinrichtung nach Anspruch 1, **dadurch gekennzeichnet, dass** die Druckräume (3a, 3b) und/oder die hydraulischen Leitungen oder die hydraulischen Kreise K1/K2 (H3, H4) über eine Verbindungsleitung (H5) miteinander verbunden sind, wobei in der Verbindungsleitung (H5) mindestens ein Schaltventil (ShV), insbesondere mehrere parallel geschaltete Schaltventile (ShV), zum wahlweise Öffnen oder Zusperren der Verbindungsleitung (H5) angeordnet ist.

6. Druckerzeugungseinrichtung nach einem der vorhergehenden Ansprüche, **dadurch gekennzeichnet, dass** beide Arbeitsräume mit dem Vorratsbehälter verbunden sind, wobei die Verbindung über Rückschlagventile mit Sperrrichtung vom Arbeitsraum der Druckerzeugereinheit (DE) zum Vorratsbehälter (4a,4b) oder Schaltventilen (PD1, PD2) gestaltet ist, wobei auch die verwendeten Schaltventile (PD1, PD2, PD1 und PD2) parallel zu den Rückschlagventilen angeordnet sein können.

7. Druckerzeugungseinrichtung nach einem der vorhergehenden Ansprüche, **dadurch gekennzeichnet, dass** zumindest ein Drucksensor (7, 7a) den Druck in mindestens einer der zum Verbraucher (V1, V2, V3, V4) führenden Hydraulikleitung (H3, H4) misst, insbesondere nur in einem Hydraulikkreis (K1 oder K2) ein Drucksensor eingesetzt ist und zusätzlich der Druck über den mit einem oder mehreren Stromsensoren (6b) gemessenen Phasenstrom des Antriebs (Linearmotor, Elektromotor) und des aus der Drehmomentkonstante kt berechneten Drehmomentes, der jeweils wirkenden hydraulischen Fläche der Arbeitsräume unter Berücksichtigung des Schaltzustandes des Verbindungsventil (ShV), (A1, A2 ,A1-A2) sowie wenn vorhanden dem Getriebewirkungsgrad berechnet wird und zur Druckregelung verwendet wird.

8. Druckerzeugereinrichtung nach einem der vorhergehenden Ansprüche, **dadurch gekennzeichnet, dass** kein Drucksensor eingesetzt wird und der Druck der Druck über den mit redundanter Stromsensoren (6b) gemessenen Phasenstrom, des Antriebs (Linearmotor, Elektromotor) und des aus der Drehmomentkonstante kt berechneten Drehmomentes, der jeweils wirkenden hydraulischen Fläche der Arbeitsräume unter Berücksichtigung des Schaltzustandes des Verbindungsventil (ShV), (A1, A2 ,A1-A2) sowie wenn vorhanden dem Getriebewirkungsgrad berechnet wird und zur Druckregelung verwendet wird.

9. Druckerzeugungseinrichtung nach einem der vorhergehenden Ansprüche, **dadurch gekennzeichnet, dass** jedem hydraulisch wirkenden Arbeitsraum (V1k, V2K, V1K1, V1K2) der Verbraucher (Vi) je ein Schaltventil (SV1, SV2, SV3, SV4, SV5) zum wahlweise Absperren oder Öffnen der jeweiligen Hydraulikleitung zur Druckversorgungseinrichtung (DE) zugeordnet ist.

10. Druckerzeugungseinrichtung nach einem der vorhergehenden Ansprüche, **dadurch gekennzeichnet, dass**
- der Druckaufbau und Druckabbau mittels Wegsteuerung des Doppelhubkolbens (1) erfolgt, insbesondere die Wegsteuerung des Doppelhubkolbens mittels Winkelposition (Rotationsmotor) des Motors (M) bzw. Hubposition des Linearmotors (17) bzw. der Doppelhubkolbenposition (6c) erfolgt
und/oder
- der Druckaufbau und Druckabbau in einer oder beiden Hydraulikleitungen (H3, H4) durch Öffnen und Schließen des Schaltventils (ShV) in der Verbindungsleitung veränderbar ist.

11. Druckerzeugungseinrichtung nach einem der vorhergehenden Ansprüche, **dadurch gekennzeichnet, dass** der Druckabbau in mindestens einem Verbraucher mittels Verstellen des Kolbens (1) und/oder durch Öffnen mindestens eines Schaltventils (PD1, PD2, ShV, AV_{K1}, AV_{K2}) erfolgt, wobei bei jeweils geöffnetem Schaltventils (PD1, PD2) sich das Hydraulikmedium zum Druckabbau in einem oder mehreren der Verbraucher (V1, V2, V3, V4, V5) über den jeweiligen Arbeitsraum (3a, 3b) oder unmittelbar über das Auslassventil (AV_{K1}, AV_{K2}) in das Vorratsbehältnis (5) entspannen bzw. abfließen kann, insbesondere beim Druckabbau in den Vorratsbehälter über den oder die Arbeitsräume (3a, 3b) sowie die Schaltventile (PD1, PD2) die Steuereinrichtung den bzw. die von einem oder mehreren Druckgeber(n) (7, 7b) in einem oder beiden Hydraulikkreis(en) und/oder den aus dem Phasenstromsensor (6b) berechneten Druck zur Regelung verwendet.

12. Druckerzeugungseinrichtung nach einem der vorhergehenden Ansprüche, **dadurch gekennzeichnet, dass**
- mittels Verstellen des Kolbens (1) der Druck in mindestens einem Verbraucher aufgebaut oder abgebaut und in mindestens einem anderen Verbraucher abgebaut wird, wobei dabei das Schaltventil (ShV), sofern vorhanden, geschlossen ist
und/oder
- die Druckversorgung zumindest zweier Verbraucher im Multiplexbetrieb (MUX), insbesondere durch Abtrennen der Verbraucher mittels der zugeordneten Ventile (SVi) erfolgt
und/oder
- die Verbindungsleitung (H5) und die Hydraulikleitung (H3) in einem Punkt (P1) zusammentreffen, wobei zwischen in dem Abschnitt (H3') der Hydraulikleitung (H3), die den Punkt (P1) und den Arbeitsraum (3a) verbindet ein Schaltventil (SV1) angeordnet ist, und dass die Verbindungsleitung (H5) und die Hydraulikleitung (H4) in einem Punkt (P2) zusammentreffen, wobei in der vom Punkt (P2) hin zu dem mindestens einen Verbraucher führenden Abschnitt (H4') der Hydraulikleitung (H4) ein weiteres Schaltventil (SV2) angeordnet ist.

13. Druckerzeugungseinrichtung nach einem der vorhergehenden Ansprüche, **dadurch gekennzeichnet, dass** die Druckversorgereinheit
- mindestens zwei Verbraucher mit Druck versorgt, wobei ein Verbraucher eine Fahrzeugkupplung, eine Kammer eines Gangstellers oder ein Getriebes ist oder
- mindestens eine Hydraulikkammer mit Druck versorgt, wobei die ersten zwei Verbraucher jeweils eine Kammer eines Verbrauchers zur Betätigung eines beidseitig wirkenden Kolbens, insbesondere zur Betätigung einer Lenkungsstange sind.

14. Druckerzeugungseinrichtung nach einem der vorhergehenden Ansprüche, **dadurch gekennzeichnet, dass** einer oder mehreren hydraulischen Kammern der Verbraucher jeweils ein Auslassventil (AVi) zum direkten Druckabbau aus der jeweiligen Kammer in das Vorratsbehältnis (5) zugeordnet ist bzw. sind.

15. Verfahren zum wahlweisen Druckauf- und Druckabbau in mindestens zwei hydraulischen Kammern eines oder mehrerer Verbraucher, mittels einer Druckerzeugungseinrichtung, insbesondere mittels einer Druckerzeugungseinrichtung nach einem der vorhergehenden Ansprüche, welche eine Kolben-Zylinder-Einheit (DE) aufweist, die einen beidseitig wirkenden Kolben (1) hat, der zwei Arbeitsräume (3a, 3b) im Zylinder voneinander abdichtend trennt, wobei der Kolben (1) zwei Wirkflächen (A1, A2) aufweist und jede Wirkfläche (A1, A2) des Kolbens (1) jeweils einen Arbeitsraum (3a, 3b) begrenzt, wobei jeder Arbeitsraum (3a, 3b) über eine hydraulische Leitung (H3, H4) mit einem hydraulischen Kreis (K1, K2) in Verbindung ist, wobei an jedem hydraulischen Kreis (K1, K2) mindestens eine hydraulische Kammer eines Verbrauchers (V1K, V1K1, V1K2, V2K, V3K, V4K) angeschlossen ist, und ein Antrieb (M) den Kolben (1) der Kolben-Zylinder-Einheit (DE) antreibt, **dadurch gekennzeichnet, dass** der Druckaufbau in den hydraulischen Kammern über eine Kolbenwegsteuerung des Kolbens auf Basis einer Druckvolumenkennlinie geregelt wird, und dass der Druckabbau in zumindest einer Hydraulikkammer (V1k, V1k1, V1k2, V2k, V3k, V4k) eines Hydraulikkreises (K1 oder K2) über Kolbenwegsteuerung der Druckvorsorgereinheit im Vor- oder Rückhub des Kolbens (1) über einen Arbeitsraum (3a, 3b) und/oder über ein oder mehrere Auslassventile (Avi, PD1, PD2) erfolgt, während zumindest zeitweise gleichzeitig der zweite Arbeitsraum (3b, 3a) der Druckversorgereinheit (DE) eine weitere Hydraulikkammer (V1k, V1k1, V1k2, V2k, V3k, V4k) in einem zweiten Kreis (K2 oder K1) mit Druck beaufschlagt.

16. Verfahren nach Anspruch 15, **dadurch gekennzeichnet, dass** der Druckabbau
entweder
- wahlweise über ein Schaltventil (PD1, PD2) und/oder durch Verstellen des Kolbens (1) erfolgt, wobei beim Druckabbau über ein Schaltventil (PD1, PD2) der vom Druckgeber (7, 7a) bzw. in einem Kreis aus aus dem Phasenstrom ermittelten Druck bei der Steuerung des Schaltventils (PD1, PD2) verwendet wird
oder
- über ein Auslassventil (AVK1, AVK2) und/oder durch Verstellen des Kolbens (1) durch Wegsteuerung unter Verwendung der Druck-Volumen-Kennlinie erfolgt, wobei beim Druckabbau über ein Auslassventil (AV_{K1}, AV_{K2}) der vom Druckgeber (7, 7a) bzw. in einem Kreis K1, K2 aus aus dem Phasenstrom ermittelten Druck bei der Steuerung des Schaltventils (AV1, AV2) verwendet und eine hydraulische Verbindung zwischen Druckerzeugereinheit bzw. einer Arbeitskammer der Druckerzeugereinheit (3a,3b) und Auslassventil gegeben ist, insbesondere durch Öffnen eines zwischengeschalteten Schaltventils (SV1, SV2, SV4),
insbesondere die Druckaufbauregelung durch Wegsteuerung unter Verwendung der Druck-Volumen-Kennlinie der Kolben-Zylinder-Einheit (DE) erfolgt und im Vor- und Rückhub des Kolbens (1) der Druckauf- und Druckabbau in dem jeweiligen Verbraucher erfolgt, wobei das bzw. die jeweilig(n) Schaltventil (SVi) zur Druckänderung im jeweiligen Verbraucher (Vi) geöffnet ist, besonders bevorzugt das mindestens ein Ventil (ShV) beim Umschalten zwischen Vor- und Rückhub bzw. Umschalten der Wirkflächen (A1, A2, A1-A2) betätigt, insbesondere beim Druckaufbau bei hohen Drücken zur Realisierung einer Wirkfläche (A1-A2) im Vorhub betätigt, insbesondere geöffnet, ist.

17. Verfahren nach einem der Ansprüche 15 oder 16, **dadurch gekennzeichnet, dass**
- die Umschaltung von der größeren Wirkfläche (A1) des Doppelhubkolbens (1) auf die kleinere Wirkfläche (A1-A2) durch Öffnen des ShV-Ventils in der Nähe des maximalen Arbeitsdruckes im Vorhubbetrieb erfolgt, wobei bei ShV-Ventilbetätigung das Flächenverhältnis A1/A2 = 1,5 bis 2,5 und die daraus resultierende Wirkflächenreduzierung (A1-A2) sowie das maximale Drehmoment des Motors berücksichtigt wird
und/oder
- die Druckabbauregelung durch Wegsteuerung unter Verwendung der Druck-Volumen-Kennlinie der Kolben-Zylinder-Einheit (DE) erfolgt und im Vor- und Rückhub des Kolbens (1) der Druckauf- und Druckabbau in dem jeweiligen Verbraucher erfolgt, wobei das bzw. die jeweilige(n) Schaltventile (SVi) zur Druckänderung im jeweiligen Verbraucher (Vi) geöffnet ist.

18. Verfahren nach einem der Ansprüche 15 bis 17, **dadurch gekennzeichnet, dass**
- das mindestens ein Ventil (ShV) beim Umschalten zwischen Vor- und Rückhub bzw. Umschalten der Wirkflächen (A1, A2, A1-A2) betätigt, insbesondere geöffnet, ist und beim Druckabbau der Volumenhaushalt der Druckversorgereinheit und/oder der Grundabbaugradient durch die wirksames Wirkfläche (A1, A2, A1-A2) sowie die Kolbenverstellgeschwindigkeit regelbar ist
und/oder
- die gespeicherte Energie sowie das Volumen des Verbrauchers in einem oder mehreren Verbraucher(n) (Vi) zur Unterstützung des Antriebes (M) sowie der Volumenbilanz der Kolben-Zylinder-Einheit (DE), insbesondere beim Druckaufbau in einem anderen Verbraucher (Vi) verwendet wird und ein zumindest zeitweise ein gleichzeitiger Druckaufbau in einem Hydraulikkreis und Druckabbau im anderen Hydraulikkreis erfolgt.

19. Verfahren nach einem der Ansprüche 15 bis 18, **dadurch gekennzeichnet, dass**
- der Druckaufbau/Druckabbau durch Wegsteuerung der Kolben-Zylinder-Einheit (DE) auf Basis der Druck-Volumen-Kennlinie geregelt wird und zumindest zeitweise bis zum Abschluss des kompletten Umschaltvorgangs von zwei Hydraulikkammern Schaltventile (ShV, PD1, PD2) sowie die Druckinformation (Drucksensor, berechneter Druck) zur Druckregelung verwendet wird
und/oder
- die Wegsteuerung des Doppelhubkolbens mittels Winkelposition (Rotationsmotor) des Motors (M) bzw. Hubposition des Linearmotors (17) bzw. des Doppelhubkolbenposition (6c) erfolgt
und/oder
- die Druckregelung (Druckaufbau und Druckabbau) des Doppelhubkolbens mittels Änderung der schaltbaren Wirkflächen (A1, A2) des Doppelhubkolbens (1) im beiden Hubrichtungen des Doppelhubkolbens (1) erfolgt und zur Druckregelung durch Schalten des Verbindungsventil (ShV) sowie zur Druckregelung die Druckinformation über Druckgeber/Druckberechnung über Phasenstrommessung verwendet wird.

20. Verfahren nach einem der Ansprüche 15 bis 19, **dadurch gekennzeichnet, dass**
- nur in einem Hydraulikkreis (K1 oder K2) ein Drucksensor eingesetzt wird und zusätzlich der Druck über den mit einem oder mehreren Stromsensoren (6b) gemessenen Phasenstrom des Antriebs (Linearmotor, Elektromotor) und des aus der Drehmomentkonstante kt berechneten Drehmomentes, der jeweils wirkenden hydraulischen Fläche der Arbeitsräume unter Berücksichtigung des Schaltzustandes des Verbindungsventil (ShV), (A1, A2 ,A1-A2) sowie wenn vorhanden dem Getriebewirkungsgrad und berechnet wird und zur Druckregelung verwendet wird
oder
- kein Drucksensor eingesetzt wird und der Druck der Druck über den mit redundanter Stromsensoren (6b) gemessenen Phasenstrom, des Antriebs (Linearmotor, Elektromotor) und des aus der Drehmomentkonstante kt berechneten Drehmomentes, der jeweils wirkenden hydraulischen Fläche der Arbeitsräume unter Berücksichtigung des Schaltzustandes des Verbindungsventil (ShV), (A1, A2 ,A1-A2) sowie wenn vorhanden dem Getriebewirkungsgrad und berechnet wird und zur Druckregelung verwendet wird.

## Claims

1. A pressure generating device having a piston and cylinder unit (DE) including a piston (1) acting on both sides, which separates two working spaces (3a, 3b) within the cylinder from one another in a sealing manner, wherein the piston (1) has two, in particular differently dimensioned effective areas (A1, A2), and each effective area (A1, A2) of the piston (1) respectively delimits one working space (3a, 3b), wherein each working space (3a, 3b) is in communication with a hydraulic circuit (K1, K2) via a hydraulic line (H3, H4), wherein at least one hydraulic chamber of a load (V1, V1K1, V1K2, V2K, V3K, V4K) is connected to each hydraulic circuit (K1, K2), wherein a drive (M) drives the piston (1) of the piston and cylinder unit (DE), **characterized in that** either
- each working space (3a, 3b) is in communication with a reservoir (5) for a hydraulic medium by means of a hydraulic line (H1, H2), wherein at least one switching valve (PD1, PD2) is arranged in each hydraulic line (H1, H2) for optionally blocking or opening the hydraulic line (H1, H2), wherein the pressure from a hydraulic circuit (K1, K2) is released into the reservoir (5) via the respective working space (3a, 3b) and the respective hydraulic line (H3, H4), when the switching valve (PD1, PD2) is open;
or
- one or both working space/s (3a, 3b) is or are in communication with a reservoir (5) for a hydraulic medium by means of a hydraulic line (H1, H2), wherein in one or in both hydraulic line(s) (H1, H2), a switching valve (PD1, PD2) is arranged for optionally blocking or opening the hydraulic line (H1, H2), and wherein the pressure from a hydraulic circuit (K1, K2) is released into the reservoir (5) via the respective working space (3a, 3b) and the respective hydraulic line (H3, H4), when the switching valve (PD1, PD2) is open;
and/or one or more hydraulic chamber(s) of the loads each has or have an outlet valve (AVi) assigned for directly releasing pressure from the respective chamber into the reservoir (5), and that the pressure spaces (3a, 3b) and/or the hydraulic lines (H3, H4) are in communication with one another via a connecting line (H5), wherein a switching valve (ShV) for optionally opening or blocking the connecting line (H5) is arranged within the connecting line (H5).

2. The pressure generating device according to claim 1, **characterized in that** the drive of the piston and cylinder unit (DE) has a linear actuator, in particular a linear motor (15, 16) or rotation motor (10, 11, 12), and a transmission.

3. The pressure generating device according to claim 1, **characterized in that** only the frontal working space (3a) is or can be in communication with the reservoir via a valve (PD1), or both working spaces (3a, 3b) are or can be in communication with the reservoir via valves (PD1, PD2).

4. The pressure generating device according to claim 1, **characterized in that** the effective areas (A1, A2) are different and have a relationship of 1.5 to 1, up to 2.5 to 1, in particular of 2 to 1 to one another.

5. The pressure generating device according to claim 1, **characterized in that** the pressure spaces (3a, 3b) and/or the hydraulic lines or the hydraulic circuits K1/K2 (H3, H4) are in communication with one another via a connecting line (H5), wherein at least one switching valve (ShV), in particular several switching valves (ShV) switched in parallel, are arranged within the connecting line (H5) for optionally opening or blocking the connecting line (H5).

6. The pressure generating device according to any one of the preceding claims, **characterized in that** both working spaces are in communication with the reservoir, wherein the communication is formed via check valves having a closing direction from the working space of the pressure generating unit (DE) to the reservoir (4a, 3b) or switching valves (PD1, PD2), wherein the employed switching valves (PD1, PD2, PD1 and PD2) may also be arranged in parallel to the check valves.

7. The pressure generating device according to any one of the preceding claims, **characterized in that** at least one pressure sensor (7, 7a) measures the pressure in at least one of the hydraulic lines (H3, H4) leading to the load (V1, V2, V3, V4), in particular a pressure sensor is only employed in one hydraulic circuit (K1 or K2), and additionally the pressure is calculated via the phase current of the drive (linear motor, electric motor) measured by one or more current sensors (6b) and the torque calculated from the torque constant kt, the respective effective hydraulic area of the working spaces while considering the switching state of the connecting valve (ShV), (Aim A2, A1-A2), as well as - if present - the transmission efficiency, and is used for pressure regulation.

8. The pressure generating device according to any one of the preceding claims, **characterized in that** no pressure sensor is employed and the pressure is calculated via the phase current of the drive (linear motor, electric motor) measured by means of redundant current sensors (6b) and the torque calculated from the torque constant kt, the respectiveeffective hydraulic area of the working spaces while considering the switching state of the connecting valve (ShV), (A1, A2, A1-A2), as well as - if present
- the transmission efficiency, and is used for pressure regulation.

9. The pressure generating device according to any one of the preceding claims, **characterized in that** each hydraulically effective working space (V1k, V2K, V1K1, V1K2) of the loads (Vi), has respectively one switching valve (SV1, SV2, SV3, SV4, SV5) assigned for optionally blocking or opening the respective hydraulic line to the pressure supply device (DE).

10. The pressure generating device according to any one of the preceding claims, **characterized in that**
- pressure build-up and pressure reduction are performed by means of a path control of the dual reciprocating piston (1), the path control of the dual reciprocating piston being performed in particular by the angular position (rotation motor) of the motor (M) or the stroke position of the linear motor (17) or the dual reciprocating piston position (6c),
and/or
- pressure build-up and pressure reduction in one or both hydraulic lines (H3, H4) may be modified by opening or closing the switching valve (ShV) in the connecting line.

11. The pressure generating device according to any one of the preceding claims, **characterized in that** pressure reduction in at least one load is performed by means of adjusting the piston (1) and/or by opening at least one switching valve (PD1, PD2, ShV, AV_{K1}, AV_{K2}), wherein, when the switching valve (PD1, PD2) is respectively opened, the hydraulic medium for pressure reduction in one or more of the loads (V1, V2, V3, V4, V5) can relax or flow off via the respective working space (3a, 3b) or directly via the outlet valve (AV_{K1}, AV_{K2}) into the reservoir (5), in particular when pressure is reduced into the reservoir via the working space(s) (3a, 3b) as well as the switching valves (PD1, PD2), the control device uses the pressure calculated by one or more pressure sensor(s) (7, 7b) in one or both hydraulic circuit(s) and/or calculated from the phase current sensor (6b) for regulation.

12. The pressure generating device according to any one of the preceding claims, **characterized in that**
- by means of adjusting the piston (1), the pressure within at least one load is built up or reduced and is reduced in at least one other load, wherein the switching valve (ShV) - if present - is closed,
and/or
- the pressure supply of at least two loads is performed in multiplex operation (MUX), in particular by cutting off the loads by means of the assigned valves (SVi), and/or
- the connecting line (H5) and the hydraulic line (H3) coincide in one point (P1), wherein in the portion (H3') of the hydraulic line (H3) connecting the point (P1) and the working space (3a), a switching valve (SV1) is arranged, and that the connecting line (H5) and the hydraulic line (H4) converge in one point (P2), wherein in the portion (H4') of the hydraulic line (H4) extending from the point (P2) towards the at least one load, a further switching valve (SV2) is arranged.

13. The pressure generating device according to any one of the preceding claims, **characterized in that** the pressure supply unit
- supplies at least two loads with pressure, wherein one load is a vehicle coupling, a chamber of a gear actuator, or a transmission,
or
- supplies at least one hydraulic chamber with pressure, wherein the first two loads are in each case a chamber of a load for actuating a piston acting on both sides, in particular for actuating a bar of a steering system.

14. The pressure generating device according to any one of the preceding claims, **characterized in that** one or more hydraulic chambers of the loads respectively has or have one outlet valve (AVi) assigned for directly reducing pressure from the respective chamber into the reservoir (5).

15. A method for optionally building up pressure or reducing pressure in at least two hydraulic chambers of one or more loads, by means of a pressure generating device, in particular by means of a pressure generating device according to any one of the preceding claims, which has a piston and cylinder unit (DE) including a piston (1) acting on both sides, which separates two working spaces (3a, 3b) within the cylinder from one another in a sealing manner, wherein the piston (1) has two effective areas (A1, A2), and each effective area (A1, A2) of the piston (1) respectively delimits one working space (3a, 3b), wherein each working space (3a, 3b) is in communication with a hydraulic circuit (K1, K2) via a hydraulic line (H3, H4), wherein at each hydraulic circuit (K1, K2), at least one hydraulic chamber of a load (V1K, V1K1, V1K2, V2K, V3K, V4C) is connected, and a drive (M) drives the piston (1) of the piston and cylinder unit (DE), **characterized in that** building up pressure in the hydraulic chambers is regulated via a piston path control on the basis of a pressure volume characteristic, and that the reducing of pressure in at least one hydraulic chamber (V1k, V1k1, V1k2, V2k, V3k, V4k) of a hydraulic circuit (K1 or K2 ) is performed via a piston path control of the pressure supply unit in the forward stroke or return stroke of the piston (1) via a working space (3a, 3b) and/or via one or more outlet valves (Avi, PG1, PD2), while at least temporally the second working space (3b, 3a) of the pressure supply unit (DE) applies pressure simultaneously to a further hydraulic chamber(V1k, V1k1, V1k2, V2k, V3k, V4k) in a second circuit (K2 or K1).

16. The method according to claim 15, **characterized in that** pressure reduction either
- is performed optionally via a switching valve (PD1, PD2) and/or by adjusting the piston (1), wherein during pressure reduction via a switching valve (PD1, PD2), the pressure determined by the pressure transducer (7, 7a) or determined in a circuit from the phase current is used in controlling the switching valve (PD1, PD2),
or
- is performed via an outlet valve (AVK1, AVK2) and/or by adjusting the piston (1) by path control using the pressure volume characteristic, wherein during pressure reduction via an outlet valve (AV_{K1}, AV_{K2}), the pressure determined by the pressure transducer (7, 7a) or determined in a circuit K1, K2 from the phase current is used in controlling the switching valve (AV1, AV2), and a hydraulic connection is provided between the pressure generating unit or a working chamber of the pressure generating unit (3a, 3b) and the outlet valve, in particular by opening an interconnected switching valve (SV1, SV2, SV4),
in particular the pressure build up regulation is performed by path control using the pressure volume characteristic of the piston and cylinder unit (DE), and in the forward stroke and return stroke of the piston (1), pressure build up and pressure reduction are performed in the respective load, wherein the respective switching valve(s) (SVi) for changing pressure in the respective load (Vi) is/are opened, particularly preferred the at least one valve (ShV) is actuated during the changeover between the forward stroke and return stroke or the changeover of the effective areas (A1, A2, A1-A2) is actuated, in particular opened during building up pressure at high pressures for realizing an effective area (A1-A2) in the forward stroke.

17. The method according to any one of claims 15 or 16, **characterized in that**
- the changeover from the larger effective area (A1) of the dual reciprocating piston (1) to the smaller affective area (A1-A2) is performed by opening the ShV valve in the proximity of the maximum working pressure in the forward stroke operation, wherein, when the ShV valve is actuated, the area relationship A1/A2 = 1.5 to 2.5 and the resultant reduction of the effective area (A1-A2) as well as the maximum torque of the motor are considered,
and/or
- pressure reduction regulation is performed by path control using the pressure volume characteristic of the piston and cylinder unit (DE), and pressure build-up and pressure reduction in the respective load are performed in the forward stroke and return stroke of the piston (1), wherein the respective switching valve(s) (SVi) is/are opened for changing pressure in the respective load (Vi).

18. The method according to any one of claims 15 to 17, **characterized in that**
- the at least one valve (ShV) is actuated, in particular opened during the changeover between forward stroke and return stroke or during the changeover of the effective areas (A1, A2, A1-A2), and, during pressure reduction, the volume management of the pressure supplier unit and/or the basic reduction gradient can be regulated by the active effective area (A1, A2, A1-A2) as well as the piston adjusting speed,
and/or
- the stored energy as well as the volume of the load in one or more loads (s) (Vi) are used for supporting the drive (M), as well as the volume balance of the piston and cylinder unit (DE) is used, in particular during building up pressure in another load (Vi), and at least temporally, simultaneously building up pressure in a hydraulic circuit and reducing pressure in another hydraulic circuit are performed.

19. The method according to any one of claims 15 to 18, **characterized in that**
- pressure build-up/pressure reduction is regulated by the path control of the piston and cylinder unit (DE) on the basis of the pressure volume characteristic, and switching valves (ShV, PD1, PD2) as well as pressure information (pressure sensor, calculated pressure) are used at least temporally for pressure regulation until completion of the entire changeover process,
and/or
- the path control of the dual reciprocating piston is performed by means of the angular position (rotation motor) of the motor (M) or the stroke position of the linear motor (17) or the dual reciprocating piston position (6c),
and/or
- the pressure regulation (pressure build-up and pressure reduction) of the dual reciprocating piston is performed by means of changing the switchable effective areas (A1, A2) of the dual reciprocating piston (1) in both stroke directions of the dual reciprocating piston (1), and pressure regulation by switching the switching valve (ShV), as well as for pressure regulation, pressure information via pressure transducers/pressure calculation via phase current calculation is used.

20. The method according to any one of claims 15 to 19, **characterized in that**
- only in one hydraulic circuit (K1 or K2), a pressure sensor is employed, and additionally, the pressure is calculated via the phase current of the drive (linear motor, electric motor) measured by means of one or more current sensor(s) (6b) and via the torque calculated from the torque constant kt, the respectively acting hydraulic area of the working spaces while considering the switching state of the connecting valve (ShV), (A1, A2, A1-A2), as well as - if present - the transmission efficiency and is used for pressure regulation,
or
- no pressure sensor is employed and the pressure is calculated via the phase current of the drive (linear motor, electric motor) measured by means of redundant current sensors (6b) via the torque calculated from the torque constant kt, the respective effective hydraulic area of the working spaces while considering the switching state of the connecting valve (ShV), (Aim A2, A1-A2), as well as - if present - the transmission efficiency, and is used for pressure regulation.

## Revendications

1. Dispositif de génération de pression comprenant une unité de vérin à piston (DE) qui présente un piston (1) à double effet qui sépare de manière étanche l'un de l'autre deux compartiments de travail (3a, 3b) dans le vérin, sachant que le piston (1) présente deux surfaces utiles (A1, A2), en particulier de taille différente, et chaque surface utile (A1, A2) du piston (1) délimite respectivement un compartiment de travail (3a, 3b), sachant que chaque compartiment de travail (3a, 3b) est en liaison avec un circuit hydraulique (K1, K2) via une conduite hydraulique (H3, H4), sachant qu'au moins une chambre hydraulique d'un consommateur (V1, V1K1, V1K2, V2K, V3K, V4K) est raccordée à chaque circuit hydraulique (K1, K2), sachant qu'un entraînement (M) entraîne le piston (1) de l'unité de vérin à piston (DE), **caractérisé en ce que**
soit
- chaque compartiment de travail (3a, 3b) est en liaison avec un récipient de stockage (5) pour un fluide hydraulique moyennant une conduite hydraulique (H1, H2), sachant qu'au moins une vanne de commutation (PD1, PD2) destinée à isoler ou ouvrir sélectivement la conduite hydraulique (H1, H2) est disposée dans chaque conduite hydraulique (H1, H2), sachant que la pression est évacuée depuis un circuit hydraulique (K1, K2), à vanne de commutation (PD1, PD2) ouverte, vers le récipient de stockage (5) via le compartiment de travail (3a, 3b) respectif et la conduite hydraulique (H3, H4) respective ;
ou soit
- un ou les deux compartiments de travail (3a, 3b) est ou sont en liaison avec un récipient de stockage (5) pour un fluide hydraulique moyennant une conduite hydraulique (H1, H2), sachant qu'une vanne de commutation (PD1, PD2) destinée à isoler ou ouvrir sélectivement la conduite hydraulique (H1, H2) est disposée dans l'une ou dans les deux conduites hydrauliques (H1, H2), et sachant que la pression est évacuée depuis un circuit hydraulique (K1, K2), à vanne de commutation (PD1, PD2) ouverte, vers le récipient de stockage (5) via le compartiment de travail (3a, 3b) respectif et la conduite hydraulique (H3, H4) respective ;
et/ou respectivement une vanne de sortie (AVi) destinée à évacuer directement la pression depuis la chambre respective vers le récipient de stockage (5) est assignée à une ou plusieurs chambres hydrauliques des consommateurs, et **en ce que** les compartiments de pression (3a, 3b) et/ou les conduites hydrauliques (H3, H4) sont reliés entre eux via une conduite de liaison (H5), sachant qu'une vanne de commutation (ShV) destinée à ouvrir ou fermer sélectivement la conduite de liaison (H5) est disposée dans la conduite de liaison (H5).

2. Dispositif de génération de pression selon la revendication 1, **caractérisé en ce que** l'entraînement de l'unité de vérin à piston (DE) présente un actionneur linéaire, en particulier un moteur linéaire (15, 16) ou un moteur de rotation (10, 11, 12) et une transmission.

3. Dispositif de génération de pression selon la revendication 1, **caractérisé en ce que** seul le compartiment de travail (3a) avant est relié ou reliable via une vanne (PD1) au récipient de stockage ou les deux compartiments de travail (3a, 3b) sont reliés ou reliables via des vannes (PD1, PD2) au récipient de stockage.

4. Dispositif de génération de pression selon la revendication 1, **caractérisé en ce que** les surfaces utiles (A1, A2) sont différentes et présentent entre elles un rapport de 1,5 à 1 jusqu'à 2,5 à 1, en particulier de 2 à 1.

5. Dispositif de génération de pression selon la revendication 1, **caractérisé en ce que** les compartiments de pression (3a, 3b) et/ou les conduites hydrauliques ou les circuits hydrauliques K1/K2 (H3, H4) sont reliés les uns aux autres via une conduite de liaison (H5), sachant qu'au moins une vanne de commutation (ShV), en particulier plusieurs vannes de commutation (ShV) connectées en parallèle, est disposée dans la conduite de liaison (H5) pour ouvrir ou fermer sélectivement la conduite de liaison (H5).

6. Dispositif de génération de pression selon l'une des revendications précédentes, **caractérisé en ce que** les deux compartiments de travail sont reliés au récipient de stockage, sachant que la liaison est configurée via des vannes anti-retour à direction d'arrêt allant du compartiment de travail de l'unité de génération de pression (DE) vers le récipient de stockage (4a, 4b) ou des vannes de commutation (PD1, PD2), sachant que les vannes de commutation (PD1, PD2, PD1 et PD2) utilisées peuvent aussi être disposées parallèlement aux vannes anti-retour.

7. Dispositif de génération de pression selon l'une des revendications précédentes, **caractérisé en ce qu'**au moins un capteur de pression (7, 7a) mesure la pression dans au moins une des conduites hydrauliques (H3, H4) desservant le consommateur (V1, V2, V3, V4), en particulier un capteur de pression est mis en œuvre seulement dans un circuit hydraulique (K1 ou K2) et en outre la pression est calculée via le courant de phase de l'entraînement (moteur linéaire, moteur électrique) mesuré avec un ou plusieurs capteurs de courant (6b) et le couple calculé à partir de la constante de couple kt, la surface hydraulique respectivement utile des compartiments de travail compte tenu de l'état de commutation de la vanne de liaison (ShV), (A1, A2, A1-A2) ainsi que, si disponible, le degré d'action de la transmission, et est utilisée pour la régulation de pression.

8. Dispositif de génération de pression selon l'une des revendications précédentes, **caractérisé en ce qu'**aucun capteur de pression n'est mis en œuvre et la pression est calculée via le courant de phase de l'entraînement (moteur linéaire, moteur électrique) mesuré avec des capteurs de courant (6b) redondants, le couple calculé à partir de la constante de couple kt, la surface hydraulique respectivement utile des compartiments de travail compte tenu de l'état de commutation de la vanne de liaison (ShV), (A1, A2, A1-A2) ainsi que, si disponible, le degré d'action de la transmission, et est utilisée pour la régulation de pression.

9. Dispositif de génération de pression selon l'une des revendications précédentes, **caractérisé en ce que** respectivement une vanne de commutation (SV1, SV2, SV3, SV4, SV5) destinée à isoler ou ouvrir sélectivement la conduite hydraulique respective desservant le dispositif d'alimentation en pression (DE) est assignée à chaque compartiment de travail (V1k, V2K, V1K1, V1K2) hydrauliquement utile des consommateurs (Vi).

10. Dispositif de génération de pression selon l'une des revendications précédentes, caractérisé en ce
- l'établissement de pression et l'évacuation de pression sont effectués par commande de course du piston à double effet (1), en particulier la commande de course du piston à double effet est effectuée moyennant la position angulaire (moteur de rotation) du moteur (M) ou la position de course du moteur linéaire (17) ou la position de piston à double effet (6c)
et/ou
- l'établissement de pression et l'évacuation de pression dans une ou les deux conduites hydrauliques (H3, H4) sont modifiables par ouverture et fermeture de la vanne de commutation (ShV) dans la conduite de liaison.

11. Dispositif de génération de pression selon l'une des revendications précédentes, caractérisé en ce l'évacuation de pression est effectuée dans au moins un consommateur par déplacement du piston (1) et/ou par ouverture d'au moins une vanne de commutation (PD1, PD2, ShV, AVₖ₁, AV_{K2}), sachant que le fluide hydraulique, à vanne de commutation (PD1, PD2) respectivement ouverte, pour l'évacuation de pression dans un ou plusieurs des consommateurs (V1, V2, V3, V4, V5), peut se détendre ou s'écouler vers le récipient de stockage (5) via le compartiment de travail (3a, 3b) respectif ou directement via la vanne de sortie (AV_{K1}, AV_{K2}), en particulier lors de l'évacuation de pression vers le récipient de stockage via le ou les compartiments de travail (3a, 3b) ainsi que les vannes de commutation (PD1, PD2), le dispositif de commande utilise pour la régulation la pression calculée par un ou plusieurs capteurs de pression (7, 7b) dans un ou les deux circuits hydrauliques et/ou la pression calculée à partir du capteur de courant de phase (6b).

12. Dispositif de génération de pression selon l'une des revendications précédentes, **caractérisé en ce que**
- par déplacement du piston (1), la pression est établie ou évacuée dans au moins un consommateur et est évacuée dans au moins un autre consommateur, sachant qu'à cette occasion la vanne de commutation (ShV), dans la mesure où elle existe, est fermée
et/ou
- l'alimentation en pression d'au moins deux consommateurs est effectuée en mode multiplex (MUX), en particulier par séparation des consommateurs moyennant les vannes (SVi) assignées
et/ou
- la conduite de liaison (H5) et la conduite hydraulique (H3) se rejoignent en un point (P1), sachant qu'une vanne de commutation (SV1) est disposée dans la section (H3') de la conduite hydraulique (H3) qui relie le point (P1) et le compartiment de travail (3a), et sachant que la conduite de liaison (H5) et la conduite hydraulique (H4) se rejoignent en un point (P2), sachant qu'une vanne de commutation (SV2) supplémentaire est disposée dans la section (H4') de la conduite hydraulique (H4) menant du point (P2) à l'au moins un consommateur.

13. Dispositif de génération de pression selon l'une des revendications précédentes, **caractérisé en ce que** l'unité d'alimentation en pression
- alimente en pression au moins deux consommateurs, sachant qu'un consommateur est un embrayage de véhicule, une chambre d'un sélecteur de vitesse ou une la transmission
ou
- alimente en pression au moins une chambre hydraulique, sachant que les deux premiers consommateurs sont respectivement une chambre d'un consommateur destiné à actionner un piston à double effet, en particulier à actionner une barre de direction.

14. Dispositif de génération de pression selon l'une des revendications précédentes, **caractérisé en ce que** respectivement une vanne de sortie (AVi) destinée à évacuer directement la pression depuis la chambre respective vers le récipient de stockage (5) est assignée à une ou plusieurs chambres hydrauliques des consommateurs.

15. Procédé destiné à établir et évacuer sélectivement une pression dans au moins deux chambres hydrauliques d'un ou de plusieurs consommateurs, moyennant un dispositif de génération de pression, en particulier moyennant un dispositif de génération de pression selon l'une des revendications précédentes, lequel présente une unité de vérin à piston (DE) qui présente un piston (1) à double effet qui sépare de manière étanche l'un de l'autre deux compartiments de travail (3a, 3b) dans le vérin, sachant que le piston (1) présente deux surfaces utiles (A1, A2) et chaque surface utile (A1, A2) du piston (1) délimite respectivement un compartiment de travail (3a, 3b), sachant que chaque compartiment de travail (3a, 3b) est en liaison avec un circuit hydraulique (K1, K2) via une conduite hydraulique (H3, H4), sachant qu'au moins une chambre hydraulique d'un consommateur (V1K, V1K1, V1K2, V2K, V3K, V4K) est raccordée à chaque circuit hydraulique (K1, K2), et un entraînement (M) entraîne le piston (1) de l'unité de vérin à piston (DE), **caractérisé en ce que** l'établissement de pression dans les chambres hydrauliques est régulé par commande de course de piston du piston sur la base d'une courbe caractéristique pression-volume, et **en ce que** évacuation de pression dans au moins une chambre hydraulique (V1k, V1k1, V1k2, V2k, V3k, V4k) d'un circuit hydraulique (K1 ou K2) est effectué par commande de course de piston de l'unité d'alimentation en pression dans la course avant ou arrière du piston (1) via un compartiment de travail (3a, 3b) et/ou via une ou plusieurs vannes de sortie (Avi, PD1, PD2), tandis que le deuxième compartiment de travail (3b, 3a) de l'unité d'alimentation en pression (DE) met en pression simultanément, au moins temporairement, une chambre hydraulique (V1k, V1k1, V1k2, V2k, V3k, V4k) supplémentaire dans un deuxième circuit (K2 ou K1).

16. Procédé selon la revendication 15, **caractérisé en ce que** l'évacuation de pression
soit
- est effectuée sélectivement via une vanne de commutation (PD1, PD2) et/ou par déplacement du piston (1), sachant que lors de l'évacuation de pression via une vanne de commutation (PD1, PD2), la pression déterminée par le capteur de pression (7, 7a) ou dans un circuit à partir du courant de phase est utilisée lors de la commande de la vanne de commutation (PD1, PD2)
soit
- est effectuée via une vanne de sortie (AVK1, AVK2) et/ou par déplacement du piston (1) par commande de course en utilisant la courbe caractéristique pression-volume, sachant que lors de l'évacuation de pression via une vanne de sortie (AV_{K1}, AV_{K2}), la pression déterminée par le capteur de pression (7, 7a) ou dans un circuit (K1, K2) à partir du courant de phase est utilisée lors de la commande de la vanne de commutation (AV1, AV2) et une liaison hydraulique est disposée entre l'unité de génération de pression ou une chambre de travail de l'unité de génération de pression (3a, 3b) et la vanne de sortie, en particulier par ouverture d'une vanne de commutation (SV1, SV2, SV4) intercalée,
en particulier la régulation d'établissement de pression est effectuée par commande de course en utilisant la courbe caractéristique pression-volume de l'unité de vérin à piston (DE) et l'établissement et l'évacuation de pression dans le consommateur respectif sont effectués dans la course avant et arrière du piston (1), sachant que la ou les vannes de commutation (SVi) respectives est (sont) ouvert(es) pour modifier la pression dans le consommateur (Vi) respectif, en particulier de préférence l'au moins une vanne (ShV) est actionnée, en particulier ouverte, lors de la commutation entre la course avant et arrière ou la commutation des surfaces utiles (A1, A2, A1-A2), en particulier lors de l'établissement de pression en cas de pressions élevées pour la réalisation d'une surface utile (A1-A2) dans la course avant.

17. Procédé selon l'une des revendications 15 ou 16, **caractérisé en ce que**
- la commutation de la surface utile (A1) plus grande du piston à double effet (1) à la surface utile (A1-A2) plus petite est effectuée par ouverture de la vanne ShV à proximité de la pression de travail maximale dans le mode de course avant, sachant qu'en cas d'actionnement de la vanne ShV, le rapport de surface A1/A2 = 1,5 à 2,5 et la réduction de surface utile (A1-A2) qui en résulte ainsi que le couple maximal du moteur sont pris en compte
et/ou
- la régulation d'évacuation de pression est effectuée par commande de course en utilisant la courbe caractéristique pression-volume de l'unité de vérin à piston (DE) et l'établissement et l'évacuation de pression dans le consommateur respectif sont effectués dans la course avant et arrière du piston (1), sachant que la ou les vannes de commutation respectives (SVi) est (sont) ouverte(s) pour modifier la pression dans le consommateur (Vi) respectif.

18. Procédé selon l'une des revendications 15 à 17, **caractérisé en ce que**
- l'au moins une vanne (ShV) est actionnée, en particulier ouverte, lors de la commutation entre la course avant et arrière ou la commutation des surfaces utiles (A1, A2, A1-A2) et, lors de l'évacuation de pression, la gestion de volume de l'unité d'alimentation en pression et/ou le gradient d'évacuation de base est régulable par la surface utile (A1, A2, A1-A2) effective ainsi que la vitesse de déplacement de piston et/ou
- l'énergie accumulée ainsi que le volume du consommateur sont utilisés dans un ou plusieurs consommateurs (Vi) pour assister l'entraînement (M) ainsi que le bilan de volume de l'unité de vérin à piston (DE), en particulier lors de l'établissement de pression dans un autre consommateur (Vi), et un établissement de pression dans un circuit hydraulique et une évacuation de pression dans un autre circuit hydraulique sont effectués simultanément, au moins temporairement.

19. Procédé selon l'une des revendications 15 à 18, **caractérisé en ce que**
- l'établissement/l'évacuation de pression est régulé par commande de course de l'unité de vérin à piston (DE) sur la base de la courbe caractéristique pression-volume et, au moins temporairement, des vannes de commutation (ShV, PD1, PD2) ainsi que l'information de pression (capteur de pression, pression calculée) sont utilisées pour la régulation de pression jusqu'à l'achèvement de l'opération de commutation complète de deux chambres hydrauliques
et/ou
- la commande de course du piston à double effet est effectuée moyennant la position angulaire (moteur de rotation) du moteur (M) ou la position de course du moteur linéaire (17) ou la position de piston à double à effet (6c)
et/ou
- la régulation de pression (établissement de pression et évacuation de pression) du piston à double effet est effectuée par modification des surfaces utiles (A1, A2) commutables du piston à double effet (1) dans les deux directions de course du piston à double effet (1) et, pour la régulation de pression par commutation de la vanne de liaison (ShV) ainsi que pour la régulation de pression, l'information de pression via capteur de pression/calcul de pression par mesure de courant de phase est utilisée.

20. Procédé selon l'une des revendications 15 à 19, **caractérisé en ce que**
- un capteur de pression est mis en œuvre seulement dans un circuit hydraulique (K1 ou K2) et en outre la pression est calculée via le courant de phase de l'entraînement (moteur linéaire, moteur électrique) mesuré avec un ou plusieurs capteurs de courant (6b) et le couple calculé à partir de la constante de couple kt, la surface hydraulique respectivement utile des compartiments de travail compte tenu de l'état de commutation de la vanne de liaison (ShV), (A1, A2, A1-A2) ainsi que, si disponible, le degré d'action de la transmission, et est utilisée pour la régulation de pression
ou
- aucun capteur de pression n'est mis en œuvre et la pression est calculée via le courant de phase de l'entraînement (moteur linéaire, moteur électrique) mesuré avec des capteurs de courant (6b) redondants, le couple calculé à partir de la constante de couple kt, la surface hydraulique respectivement utile des compartiments de travail compte tenu de l'état de commutation de la vanne de liaison (ShV), (A1, A2, A1-A2) ainsi que, si disponible, le degré d'action de la transmission, et est utilisée pour la régulation de pression.
